# EUROPÄISCHE PATENTSCHRIFT

(11) **EP 1 155 098 B1**
(45) Veröffentlichungstag und Bekanntmachung des Hinweises auf die Patenterteilung: **26.05.2004**
(21) Anmeldenummer: 00905026.1
(22) Anmeldetag: 05.02.2000
(51) Int. Cl.: C09K 19/54, C09K 19/00, C09K 19/20, C09K 19/38, C09D 5/36

(54) **FLÜSSIGKRISTALLINE STOFFGEMENGE**
LIQUID CRYSTALLINE SUBSTANCE MIXTURES
MELANGE DE MATIERE A BASE DE CRISTAUX LIQUIDES

(30) Priorität: 10.02.1999 DE 19905394
(43) Veröffentlichungstag der Anmeldung: 21.11.2001
(73) Patentinhaber: BASF AKTIENGESELLSCHAFT, 67056 Ludwigshafen (DE)
(72) Erfinder: MEYER, Frank, D-69115 Heidelberg (DE); ISHIDA, Hiroki, Toky0 158-0091 (JP); SCHUHMACHER, Peter, D-68163 Mannheim (DE); NEUMANN, Horst, D-67061 Ludwigshafen (DE)
(74) Vertreter: Poganiuch, Peter
(86) Internationale Anmeldenummer: PCT/EP2000/000915
(87) Internationale Veröffentlichungsnummer: WO 2000/047694

(56) Entgegenhaltungen:
- WO-A-96/02597
- WO-A-97/00600
- DE-A- 19 716 822
- DE-A- 19 738 369
- GB-A- 2 328 436

## Beschreibung

Die vorliegende Erfindung betrifft flüssigkristalline Stoffgemenge, welche als Komponenten
A) eine flüssigkristalline Mischung, enthaltend
   A1) 40 - 99,5 Gew,-% bezogen auf die Gesamtmenge der Komponente A,
      mindestens einer Verbindung der Formel Ia

      Z¹-Y¹-A¹-Y³-M¹-Y⁴-A²-Y²-Z² Ia

      und mindestens einer Verbindung der Formel Ib

      Z³-Y⁵-A³-Y⁷-M²-P Ib,

      in welchen die Variablen unabhängig voneinander folgende Bedeutung haben:
      P Wasserstoff, C₁-C₁₅-Alkyl, welches durch ein oder mehrere Methyl, Fluor, Chlor oder Brom substituiert sein kann und in welchem nicht benachbarte CH₂-Gruppen durch Sauerstoff, Schwefel, -CO-, -O-CO-, -CO-Ooder -O-CO-O- ersetzt sein können, oder eine Gruppierung -Y⁸-A⁴-Y⁶-Z⁴, worin die Variablen die zuvor beschriebene Bedeutung besitzen,
      Z¹ bis Z⁴ polymerisierbare Gruppierungen,
      Y¹ bis Y⁸ eine chemische Einfachbindung, Sauerstoff, Schwefel, -O-CO-, -CO-O-, -O-CO-O-, -CO-NR-, -NR-CO-, -O-CO-NR-, -NR-CO-O- oder -NR-CO-NR-,
      Z¹-Y¹-, Z²-Y²-, Z³-Y⁵ und im gegebenen Fall Z⁴-Y⁶eine Gruppe ausgewählt aus der Gruppe von Methacryloyloxy, Acryloyloxy und Vinyloxy,
      R Wasserstoff oder C₁-C₄-Alkyl,
      A¹ bis A⁴ Spacer mit 1 bis 30 C-Atomen, in welchen die Kohlenstoffkette durch ein oder mehrere Methyl, Fluor, Chlor oder Brom substituiert und/oder durch Sauerstoff in Etherfunktion, Schwefel in Thioetherfunktion oder durch nichtbenachbarte Iminooder C₁-C₄-Alkyliminogruppen unterbrochen sein kann,
      M¹ eine mesogene Gruppe der Formel Ic

         -T¹-Y⁹-T^{1'}- Ic,

         und
      M² eine mesogene Gruppe der Formel Id

         (-T²-Y¹⁰)ᵣ-T²- Id,

         worin die Variablen in den Formeln Ic und Id unabhängig voneinander folgende Bedeutung haben:
         T¹, T^{1'} und T² zweiwertige gesättigte oder ungesättigte carbo- oder heterocyclische Reste,
         Y⁹ und Y¹⁰ Brückenglieder gemäß der Definition von Y¹ bis Y⁸ oder -CH₂-O-, -O-CH₂-, -CH=N-, -N=CH- oder -N=N-,
         r ein Wert von 0, 1, 2 oder 3,
         wobei die Reste T² und Y¹⁰ für den Fall, daß r verschieden von 0 ist, gleich oder verschieden sein können sowie
   A2) weiterhin mindestens eine chirale Verbindung ausgewählt aus der Gruppe bestehend aus den Formeln

      (Z⁵-Y¹¹)ₙX Ie,

      (Z⁵-Y¹¹-A⁵-Y¹²)ₙX If;

      (Z⁵-Y¹¹)ₙX; Ig,

      sowie

      (Z¹¹-Y¹¹-A⁵-Y¹²-M-Y¹³)ₙX Ih

      in welchen die Variablen Z⁵ polymerisierbare Gruppierungen, Y¹¹ bis Y¹³ Brückenglieder, A⁵ Spacer und M mesogene Gruppen bezeichnen und welche dieselbe allgemeine Bedeutung wie Y¹ bis Y⁸, A¹ bis A⁴ und M¹ und M² in den Formeln Ia und Ib besitzen, n für Werte von 1, 2, 3, 4, 5 oder 6 steht, X für n wertige chirale Reste wobei die n an den chiralen Rest gebundenen Gruppierungen gleich oder verschieden sein können,
   B) als weitere Zusätze
      b1) mindestens ein Photoinitiator,
      b2) mindestens ein Reaktivverdünner, welcher fotopolymerisierbare Gruppen enthält, und gegebenenfalls
      b3) Verdünnungsmittel,
   C) gegebenenfalls weitere Zusätze ausgewählt aus der Gruppe bestehend aus
      c1) Entschäumern und Entlüftern,
      c2) Gleit- und Verlaufshilfsmitteln
      c3) thermisch härtenden oder strahlenhärtenden Hilfsmitteln,
      c4) Substratnetzhilfsmitteln,
      c5) Netz- und Dispergierhilfsmitteln,
      c6) Hydrophobierungsmitteln,
      c7) Haftvermittlern und
      c8) Hilfsmitteln zur Verbesserung der Kratzfestigkeit,
   D) gegebenenfalls weitere Zusätze ausgewählt aus der Gruppe bestehend aus
      di) Farbstoffen und
      d2) Pigmenten
      und
   E) gegebenenfalls weitere Zusätze ausgewählt aus der Gruppe der Licht-, Hitze- und/oder Oxidationsstabilisatoren. enthalten.

Eine ausführliche Definition der Variablen Z¹ bis Z⁴, Y¹ bis Y¹³, A¹ bis A⁴, P, M¹, M² sowie T¹, T^{1'} und T² ist der nachfolgenden Beschreibung zu entnehmen.

Weiter betrifft die Erfindung-die Verwendung solcher flüssigkristallinen Stoffgemenge als Druckfarbe, zum Bedrucken oder Beschichten von Substraten, in elektrooptischen Bauteilen, zur fälschungssicheren Markierung von Gegenständen und zur Herstellung von Filmen oder Beschichtungen, welche im Wellenlängenbereich von 250 bis 1300 nm selektiv Licht reflektieren.

Weiter betrifft die Erfindung Polymerisate oder polymerisierte Filme, welche durch Polymerisation der erfindungsgemäßen flüssigkristallinen Stoffgemenge erhalten werden, und die Verwendung solcher polymerisierten Filme als optische Filter, Polarisatoren, Dekorationsmittel, fälschungssichere Markierungsmittel und Reflexionsmedien für die selektive Reflexion von Strahlung im Wellenlängenbereich von 250 bis 1300 nm.

Weiter betrifft die Erfindung ein Verfahren zum Bedrucken oder Beschichten von Substraten unter Verwendung der erfindungsgemäßen flüssigkristallinen Stoffgemenge.

Weiterhin betrifft die Erfindung ein Verfahren zur Herstellung fälschungssicherer Markierungen unter Verwendung der erfindungsgemäßen flüssigkristallinen Stoffgemenge.

Weiter betrifft die Erfindung Substrate, auf welche die erfindungsgemäßen flüssigkristallinen Stoffgemenge oder die erfindungsgemäßen Polymerisate oder polymerisierten Filme aufgebracht oder welche gemäß dem erfindungsgemäßen Verfahren bedruckt oder beschichtet sind.

In der Schrift WO 96/02597 wird ein Verfahren zur Beschichtung oder zum Bedrucken von Substraten mit einem Beschichtungs- oder Bedruckungsmittel beschrieben, wobei letzteres flüssigkristalline polymerisierbare Monomere enthält. Das Beschichtungs- oder Bedruckungsmittel enthält hierbei entweder ein chirales flüssigkristallines Monomeres oder ein achirales flüssigkristallines Monomeres und eine nicht flüssigkristalline Verbindung sowie polymere Bindemittel und/oder monomere Verbindungen, welche durch Polymerisation in das polymere Bindemittel überführt werden können.

Entsprechend den in dieser Schrift aufgeführten Beispielen lassen sich diese Bedruckungs- oder Beschichtungsmittel mittels diverser Auftragstechniken, z.B. durch Spritzen oder im Offsetdruck, auf verschiedene Substrate aufbringen und bilden dort nach der Aushärtung, z.B. durch Bestrahlung mit UV-Licht, festhaftende und gegen äußere Einflüsse beständige Schichten.

Die solchermaßen erhaltenen Schichten zeigen jedoch meist nicht das gewünschte Maß an Brillanz und Helligkeit. Weiter sind die beschriebenen Bedruckungs- oder Beschichtungsmittel, u.a. wegen ihrer durchweg hohen Viskosität, nicht optimal für die Verdrukkung, insbesondere in Durch-, Flach- und Hochdruckverfahren, geeignet.

Aufgabe der vorliegenden Erfindung war es daher, flüssigkristalline Stoffgemenge bereitzustellen, welche u.a. als Druckfarbe in gängigen Druckverfahren einsetzbar sind und die Erzielung von Drucken mit hoher Farbechtheit, Brillanz und Helligkeit sowie die Herstellung homogener und glatter flüssigkristalliner Schichten und Filme ermöglichen.

Es wurde nun gefunden, daß diese Aufgabe in vorteilhafter Weise durch die eingangs beschriebenen flüssigkristallinen Stoffgemenge aus den Komponenten A) und B) sowie den gegebenenfalls vorhandenen Komponenten C) bis E) gelöst wird.

Die flüssigkristalline Mischung A) enthält -bezogen auf die Gesamtmenge der Komponente A)- 40-99,5 Gew.-% A1) sowie mindestens eine chirale Verbindung A).

Komponente A1 enthält
mindestens eine Verbindung der Formel Ia

Z¹-Y¹-A¹-Y³-M¹-Y⁴-A²-Y²-Z² Ia

und mindestens eine Verbindung der Formel Ib

Z³-Y⁵-A³-Y⁷-M²-P Ib,

in welchen die Variablen unabhängig voneinander folgende Bedeutung haben:
P Wasserstoff, C₁-C₁₅-Alkyl, welches durch ein oder mehrere Methyl, Fluor, Chlor oder Brom substituiert sein kann und in welchem nicht benachbarte CH₂-Gruppen durch Sauerstoff, Schwefel, -CO-, -O-CO-, -CO-Ooder -O-CO-O- ersetzt sein können, oder eine Gruppierung -Y⁸-A⁴-Y⁶-Z⁴, worin die Variablen die zuvor beschriebene Bedeutung besitzen,
Z¹ bis Z⁴ polymerisierbare Gruppierungen,
Y¹ bis Y⁸ eine chemische Einfachbindung, Sauerstoff, Schwefel, -O-CO-, -CO-O-, -O-CO-O-, -CO-NR-, -NR-CO-, -O-CO-NR-, -NR-CO-O- oder -NR-CO-NR-,
Z¹-Y¹-, Z²-Y²-, Z³-Y⁵ und im gegebenen Fall Z⁴-Y⁶eine Gruppe ausgewählt aus der Gruppe von Methacryloyloxy, Acryloyloxy und Vinyloxy,
R Wasserstoff oder C₁-C₄-Alkyl,
A¹ bis A⁴ Spacer mit 1 bis 30 C-Atomen, in welchen die Kohlenstoffkette durch ein oder mehrere Methyl, Fluor, Chlor oder Brom substituiert und/oder durch Sauerstoff in Etherfunktion, Schwefel in Thioetherfunktion oder durch nichtbenachbarte Iminooder C₁-C₄-Alkyliminogruppen unterbrochen sein kann,
M¹ eine mesogene Gruppe der Formel Ic

   -T¹-Y⁹-T^{1'}- Ic,

   und
M² eine mesogene Gruppe der Formel Id

   (-T²-Y¹⁰)ᵣ-T²- Id,

   worin die Variablen in den Formeln Ic und Id unabhängig voneinander folgende Bedeutung haben:
   T¹, T^{1'} und T² zweiwertige gesättigte oder ungesättigte carbo- oder heterocyclische Reste,
   Y⁹ und Y¹⁰ Brückenglieder gemäß der Definition von Y¹ bis Y⁸ oder -CH₂-O-, -O-CH₂-, -CH=N-, -N=CH- oder -N=N-,
   r ein Wert von 0, 1, 2 oder 3,
   wobei die Reste T² und Y¹⁰ für den Fall, daß r verschieden von 0 ist, gleich oder verschieden sein können.

Komponente A1) der erfindungsgemäßen flüssigkristallinen Stoffgemenge umfaßt hierbei sowohl flüssigkristalline Mischungen, welche reine flüssigkristalline Verbindungen der Formeln Ia und Ib enthalten, als auch solche Mischungen, welche zusätzlich noch nicht flüssigkristalline Mischungsbestandteile enthalten, insgesamt jedoch flüssigkristallines Verhalten aufweist. Solche nicht flüssigkristallinen Mischungsbestandteile sind üblicherweise Nebenprodukte, welche bei der Synthese der flüssigkristallinen Verbindungen oder der Synthese von Mischungen der flüssigkristallinen Verbindungen entstehen.

Die mindestens eine chirale Verbindung A2) muss selbst nicht notwendigerweise flüssigkristallines Verhalten aufweisen. Die Anwesenheit solcher chiralen Verbindungen führt -zumindestens innerhalb gewisser Temperaturbereiche- zur Ausbildung chiral-nematischer (cholesterischer) Phasen, welche meist interessante optische Eigenschaften besitzen.

Bei den polymerisierbaren Gruppierungen Z¹ bis Z⁴ handelt es sich - in Verbindung mit den Brückengliedern Y¹ bis Y⁸- um 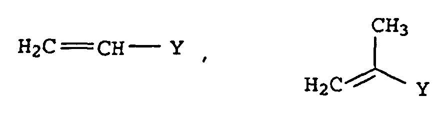 wobei Y für die Definition der Brückenglieder Y¹ bis Y⁸, d.h. eine chemische Einfachbindung, Sauerstoff, Schwefel, -O-CO-, -CO-O-, -O-CO-O-, -CO-NR-, -NR-CO-, -O-CO-NR-, -NR-CO-O- oder -NR-CO-NRund R für Wasserstoff oder C₁-C₄-Alkyl, d.h. Methyl, Ethyl, n-Propyl, i-Propyl, n-Butyl, i-Butyl, sec.-Butyl und tert.-Butyl steht (im Folgenden werden die polymerisierbaren Gruppierungen Z¹ bis Z⁴ in Verbindung mit den Brückengliedern Y¹ bis Y⁸ als polymerisierbare Einheiten bzw. als Z-Y bezeichnet).

Je nachdem, ob Komponente A) flüssigkristalline Verbindungen der Formel Ib mit einer oder zwei polymerisierbaren Einheiten enthält und gegebenenfalls abhängig vom Anteil dieser Verbindungen, erhält man unterschiedlich stark vernetzte und damit den jeweiligen Erfordernissen entsprechend angepaßte polymere Produkte.

Die Spacer A¹ und A² enthalten üblicherweise 1 bis 30, vorzugsweise 1 bis 12 Kohlenstoffatome und bestehen aus vorwiegend linearen aliphatischen Gruppen. Die Kohlenstoffkette kann darüber hinaus durch ein oder mehrere-Methyl, Fluor, Chlor oder Brom substituiert und/oder durch Sauerstoff in Etherfunktion, Schwefel in Thioetherfunktion oder durch nichtbenachbarte Imino- oder C₁-C₄-Alkyliminogruppen unterbrochen sein. Als C₁-C₄-Alkylreste kommen für letztere Methyl, Ethyl, n-Propyl, i-Propyl, n-Butyl, i-Butyl, sec.-Butyl und tert.-Butyl in Betracht.

Repräsentative Spacer sind beispielsweise:
-(CH₂)ₚ- , -(CH₂CH₂O)ₘ-CH₂CH₂- , -(CH₂CH₂S)ₘ-CH₂CH₂- ,
-(CH₂CH₂NH)ₘ-CH₂CH₂- , 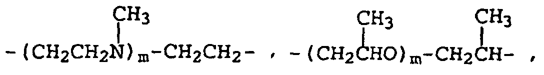 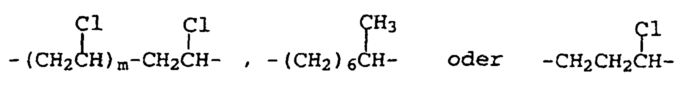 wobei
p einen ganzzahligen Wert von 1 bis 30, vorzugsweise von 1, 2, 3, 4, 5, 6, 7, 8, 9, 10, 11 oder 12, und m einen ganzahligen Wert von 1 bis 14, vorzugsweise von 1, 2 oder 3, annimmt.

Als C₁-C₁₅-Alkyl für P kommen vorzugsweise unverzweigte Alkylketten in Frage, wie z.B. Methyl, Ethyl, n-Propyl, n-Butyl, n-Pentyl, n-Hexyl, n-Heptyl, n-Octyl, n-Nonyl, n-Decyl, n-Undecyl, n-Dodecyl, n-Tridecyl, n-Tetradecyl oder n-Pentadecyl.

Diese C₁-C₁₅-Alkylreste können durch ein oder mehrere, in der Regel bis zu drei, Methyl, Fluor, Chlor oder Brom substituiert sein. Beispielsweise steht P dann für i-Propyl ("1-Methylethyl"), sec-Butyl ("1-Methylpropyl"), i-Butyl ("2-Methylpropyl"), tert-Butyl ("1,2-Dimethylethyl"), 1-Methylbutyl, 2-Methylbutyl, 3-Methylbutyl, 2,2-Dimethylpropyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1,1,2-Trimethylpropyl, 1,2,2-Trimethylpropyl oder die einfach, zweifach oder dreifach mit Methyl substituierten Reste n-Hexyl, n-Heptyl, n-Octyl, n-Nonyl, n-Decyl, n-Undecyl, n-Dodecyl, n-Tridecyl, n-Tetradecyl oder n-Pentadecyl und deren Isomere. Durch formalen Ersatz der Methylgruppen in den exemplarisch genannten Resten durch Fluor, Chlor oder Brom erhält man die entsprechenden mit Halogen substituierten C₁-C₁₅-Alkylreste.

Nicht benachbarte CH₂-Gruppen des C₁-C₁₅-Alkyl können durch Sauerstoff, Schwefel, -CO-, -O-CO-, -CO-0- oder -O-CO-O- ersetzt sein.

Bevorzugt sind im gegebenen Fall die CH₂-Gruppen des C₁-C₁₅-Alkyl durch Sauerstoff oder Schwefel ersetzt.

Vorzugsweise sind im gegebenen Fall bis zu vier CH₂-Gruppen des C₁-C₁₅-Alkyl ersetzt.

Als C₁-C₁₅-Alkyl, in welchem CH₂-Gruppen der Kohlenstoffkette durch Sauerstoff in Etherfunktion ersetzt sind, kommen für P in Frage z.B. 2-Methoxyethyl, 2-Ethoxyethyl, 2-Propoxyethyl, 2-Butoxyethyl, 3-Methoxypropyl, 3-Ethoxypropyl, 3-Butoxypropyl, 4-Methoxybutyl, 4-Ethoxybutyl, 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,8-Trioxadecyl, 3,6,9-Trioxaundecyl, 3,6,9,12-Tetraoxatridecyl, 3,6,9,12-Tetraoxatetradecyl und die entsprechenden Schwefel-Analoga.

P kann auch eine Gruppierung -Y⁸-A⁴-Y⁶-Z⁴ bedeuten, worin die Variablen der zuvor gegebenen Definition gehorchen.

M¹ entspricht einer mesogenen Gruppe der Formel Ic

-T¹-Y⁹-T^{1'}- Ic,

und
M² einer mesogenen Gruppe der Formel Id

(-T²-Y¹⁰)ᵣ-T²- Id.

In den Formeln Ic und Id haben die Variablen unabhängig voneinander folgende Bedeutung:
T¹, T^{1'} und T² zweiwertige gesättigte oder ungesättigte carbooder heterocyclische Reste,
Y⁹ und Y¹⁰ Brückenglieder gemäß der Definition von Y¹ bis Y⁸ oder -CH₂-O-, -O-CH₂-, -CH=N-, -N=CH- oder -N=N- und
r ein Wert von 0, 1, 2 oder 3.

Für den Fall, daß r Werte von 1, 2 oder 3 annimmt, können die Reste T² und Y¹⁰ gleich oder verschieden sein.

Vorzugsweise ist r gleich 1 oder 2.

Somit handelt es sich bei den mesogenen Gruppen M¹ um "zweikernige" und bei den mesogenen Gruppen M² um "ein-", "zwei-", "drei-" oder "vierkernige", vorzugsweise jedoch um "zwei-" oder "dreikernige" Einheiten.

Die Reste T¹, T^{1'} und T² können, sofern möglich, bis zu drei gleiche oder verschiedene Substituenten ausgewählt aus der Gruppe bestehend aus C₁-C₂₀-Alkyl, C₁-C₂₀-Alkoxy, C₁-C₂₀-Alkoxycarbonyl, C₁-C₂₀-Monoalkylaminocarbonyl, C₁-C₂₀-Alkylcarbonyl, C₁-C₂₀-Alkylcarbonyloxy, C₁-C₂₀-Alkylcarbonylamino, Formyl, Halogen, Cyan, Hydroxy oder Nitro tragen kann. Im Falle von substituierten Resten T¹ und/oder T^{1'} und/oder T² ist jedoch eine einfache Substitution bevorzugt.

Insbesondere kommen als Reste T¹, T^{1'} und T² in Betracht

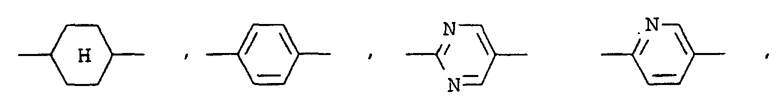

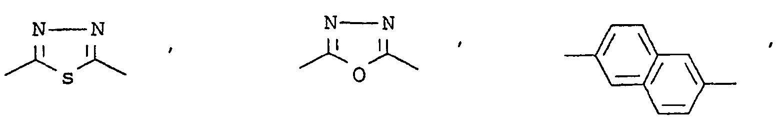

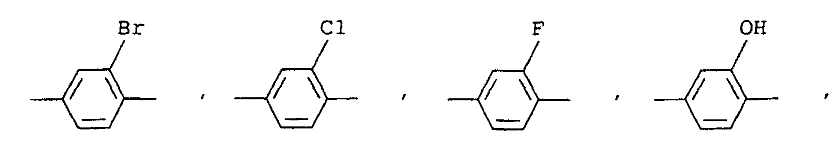

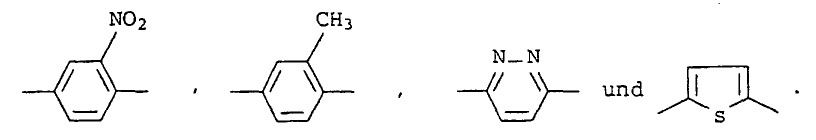

Bevorzugt als mesogene Gruppen M¹ sind z.B.

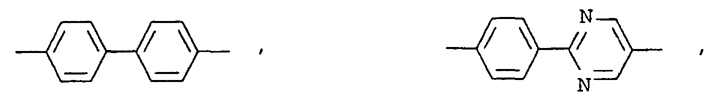

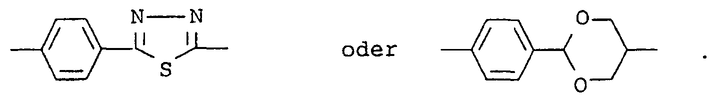

Bevorzugt als mesogene Gruppen M² sind z.B. 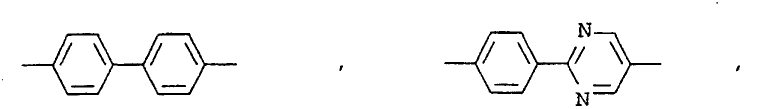 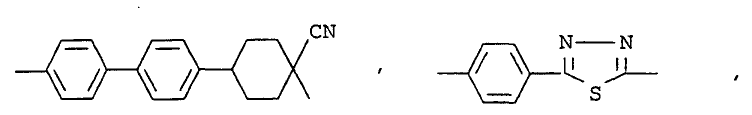 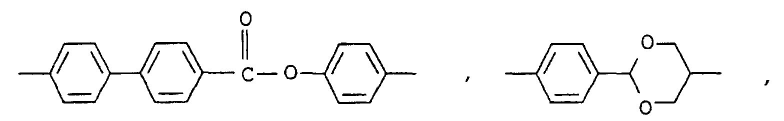 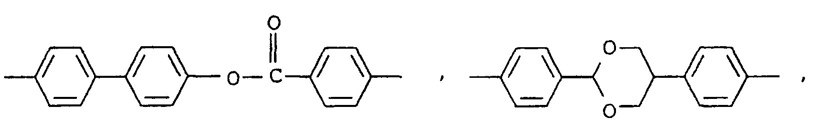 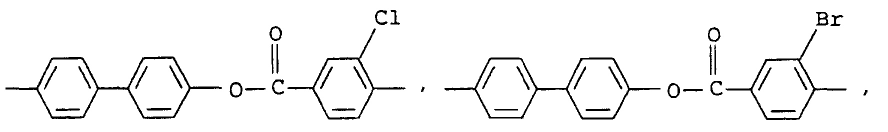 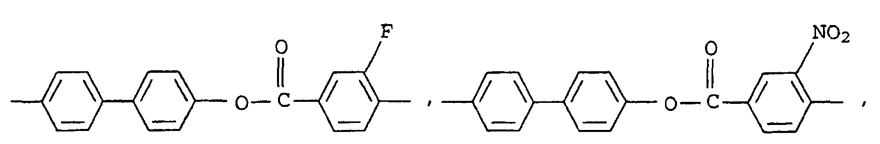 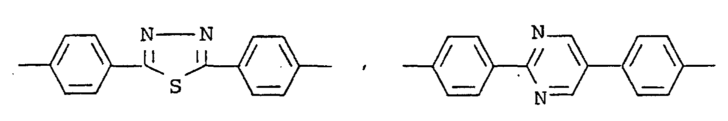 oder

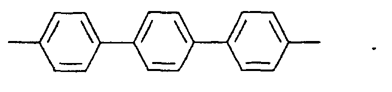

Besonders bevorzugt sind mesogene Gruppen M¹ der folgenden Formeln 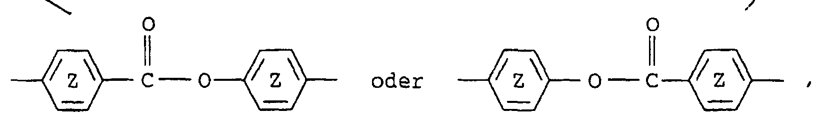 und mesogene Gruppen M² der folgenden Formeln 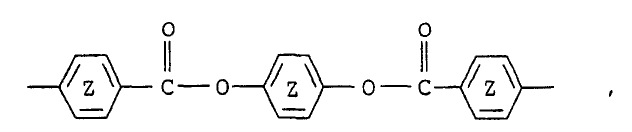 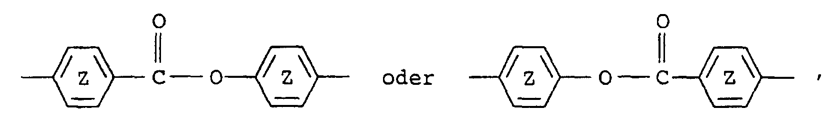 wobei jeder Ring Z bis zu drei gleiche oder verschiedene Substituenten ausgewählt aus der Gruppe bestehend aus C₁-C₂₀-Alkyl, C₁-C₂₀-Alkoxy, C₁-C₂₀-Alkoxycarbonyl, C₁-C₂₀-Monoalkylaminocarbonyl, C₁-C₂₀-Alkylcarbonyl, C₁-C₂₀-Alkylcarbonyloxy, C₁-C₂₀-Alkylcarbonylamino, Formyl, Halogen, Cyan, Hydroxy oder Nitro tragen kann.

Bevorzugte Substituenten für die aromatischen Ringe Z sind neben Fluor, Chlor, Brom, Cyan, Formyl und Hydroxy vor allem kurzkettige aliphatische Reste wie Methyl, Ethyl, n-Propyl, i-Propyl, n-Butyl, i-Butyl, tert.-Butyl sowie Alkoxy-, Alkoxycarbonyl-, Alkylcarbonyl-, Alkylcarbonyloxy-, Alkylcarbonylamino- und Monoalkylaminocarbonylreste, die diese Alkylgruppen enthalten.

Die Benzolringe Z der besonders bevorzugten Gruppen M¹ bzw. die äußeren Benzolringe Z der besonders bevorzugten Gruppen M² besitzen vorzugsweise folgende Substitutionsmuster

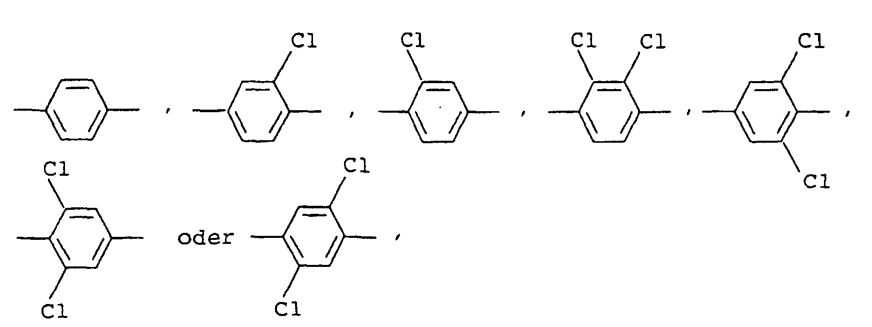

oder sie sind analog mit F, Br, CH₃, OCH₃, CHO, COCH₃, OCOCH₃ oder CN anstelle von Cl substituiert, wobei die Substituenten auch gemischt vorliegen können. Ferner sind die Strukturen 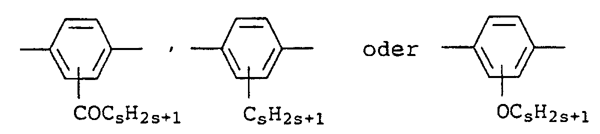 zu nennen, bei denen s einen ganzzahligen Wert von 2 bis 20, vorzugsweise von 8, 9, 10, 11, 12, 13, 14 oder 15, annimmt.

Die bevorzugten Substitutionsmuster der mittleren Benzolringe Z der besonders bevorzugten Gruppen M² sind

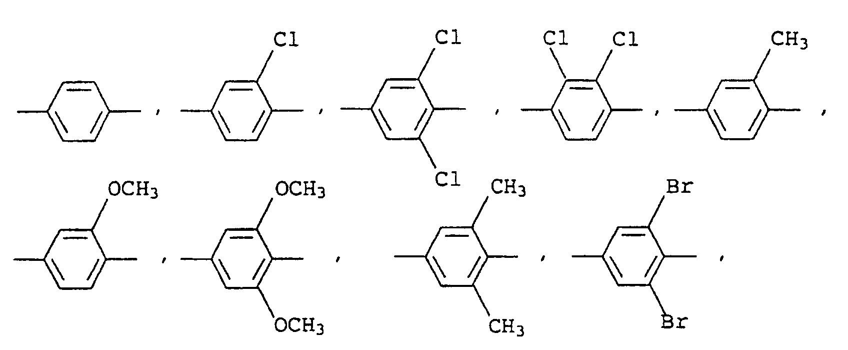

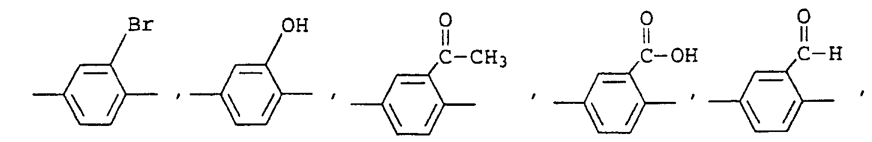

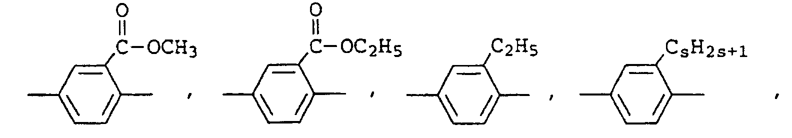

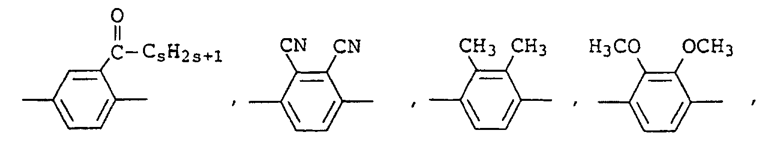

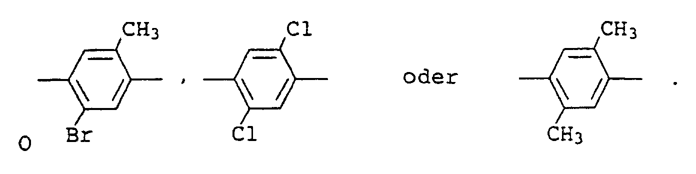

Bevorzugt bedeuten in den Verbindungen der Formeln Ia und Ib Y¹ bis Y⁵, Y⁷, Y⁹ und Y¹⁰ sowie im gegebenen Fall Y⁶ und Y⁸ unabhängig voneinander Sauerstoff, -O-CO-, -CO-O- oder -O-CO-O-.

Die flüssigkristallinen Stoffgemenge und deren bevorzugte Ausführungsformen enthalten Verbindungen der Formeln Ia und Ib, in welchen die polymerisierbaren Einheiten Z¹-Y¹-, Z²-Y²-, Z³-Y⁵- und im gegebenen Fall Z⁴-Y⁶- aus der Gruppe bestehend aus Methacryloyloxy, Acryloyloxy und Vinyloxy ausgewählt sind.

Weiterhin sind bevorzugt solche erfindungsgemäße flüssigkristalline Stoffgemenge und deren Bevorzugungen, welche eine Viskosität bei 20°C von 0,5 bis 10,0 Pa.s besitzen.

Die Viskositätswerte verstehen sich dabei als Werte der Fließviskosität bestimmt in Kegel-Platte-Geometrie.

Die Bestimmung der Viskositäten kann beispielsweise mit einem "Rheometrics Dynamic Spectrometer" der Firma Rheometrics erfolgen.

Weitere flüssigkristalline Verbindungen, welche den Formeln Ia und Ib entsprechen und welche in der, die flüssigkristallinen Mischungen enthaltenden Komponente A1) enthalten sein können, finden sich in den Schriften WO 97/00600 und WO 98/47979 sowie der älteren deutschen Patentanmeldung 197 35 829.3.

Die chiralen Verbindungen in der flüssigkristallinen Mischung (Komponente A2)) entsprechen vorzugsweise den allgemeinen Formeln Ie, If, Ig und Ih,

(Z⁵-Y¹¹)ₙX Ie,

(Z⁵-Y¹¹-A⁵-Y¹²)ₙX If,

(Z⁵-Y¹¹)ₙX Ig,

(Z¹¹-Y¹¹-A⁵-Y¹²-M-Y¹³)ₙX Ih,

in welchen die Variablen Z⁵ polymerisierbare Gruppierungen, Y¹¹ bis Y¹³ Brückenglieder, A⁵ Spacer und M mesogene Gruppen bezeichnen und welche dieselbe allgemeine Bedeutung wie die Variablen Z¹ bis Z⁴, Y¹ bis Y⁸, A¹ bis A⁴ und M¹ und M² in den Formeln Ia und Ib (sowie für M in den Formeln Ic und Id) besitzen. n steht für Werte von 1, 2, 3, 4, 5 oder 6 und X für n-wertige chirale Reste. Die n an den chiralen Rest X gebundenen Gruppierungen können hierbei gleich oder verschieden sein.

Entsprechende Reste X sind beispielsweise 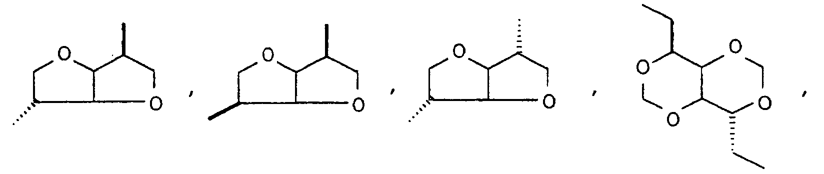 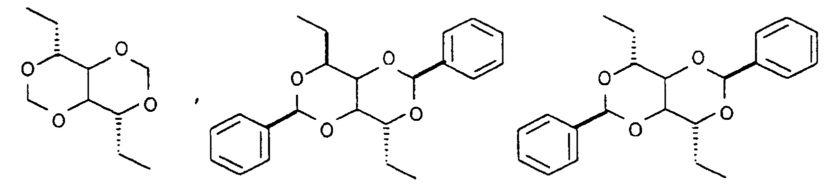 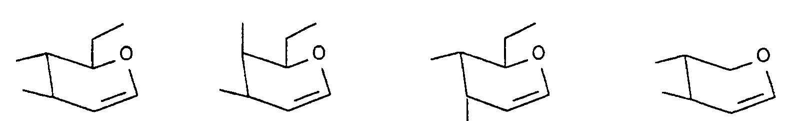 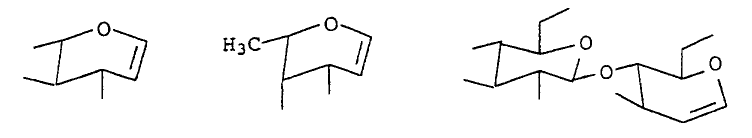 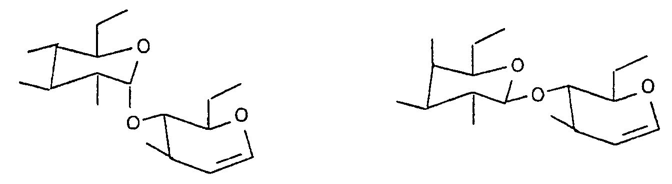 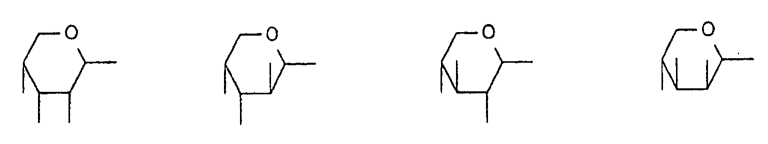 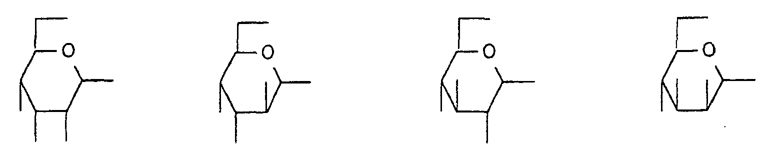 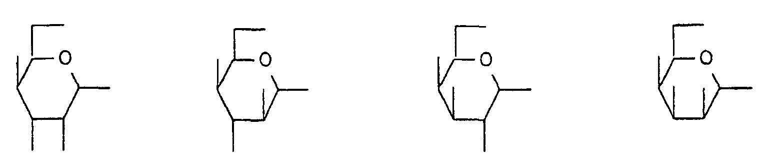 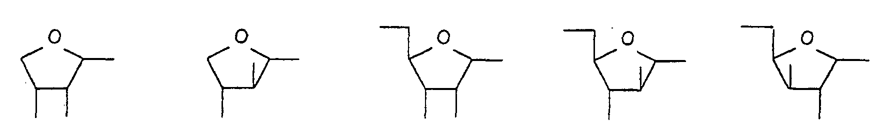 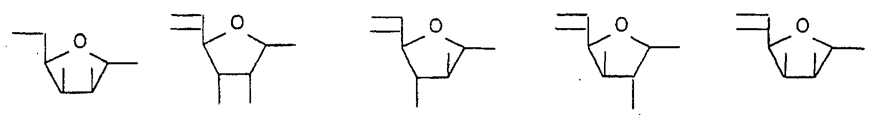 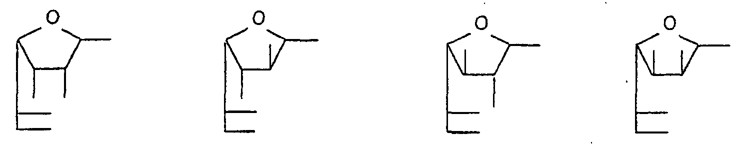 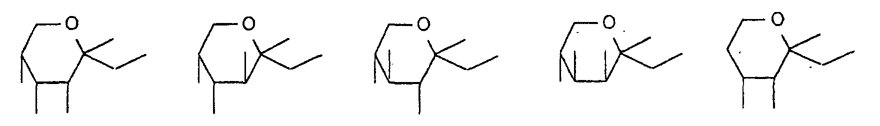 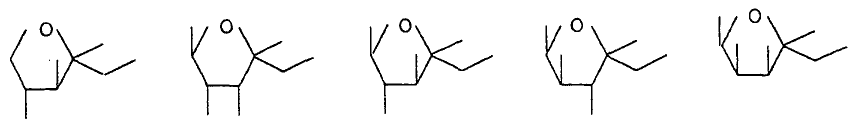 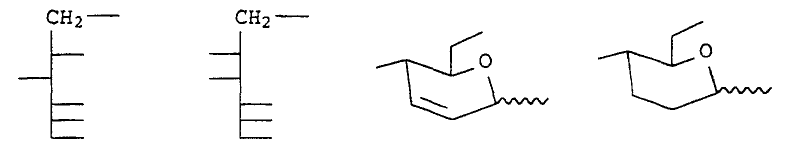 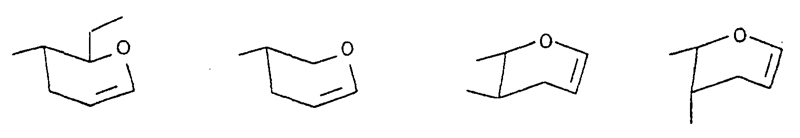 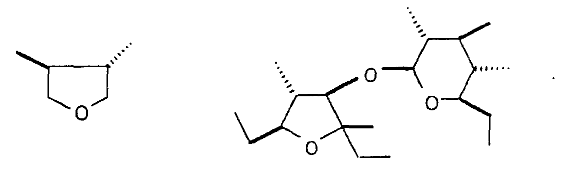 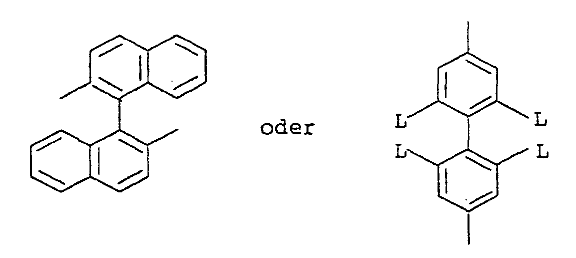 wobei
- L: R, RO, COOR, OCOR, CONHR oder NHCOR, Halogen, insbesondere Fluor, Chlor oder Brom, und R C₁-C₄-Alkyl, wie z.B. Methyl, Ethyl, n-Propyl, i-Propyl, n-Butyl, i-Butyl, tert.-Butyl bedeutet.

Besonders bevorzugt sind

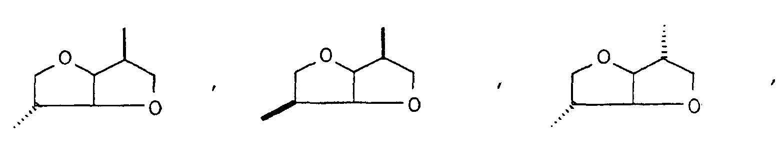

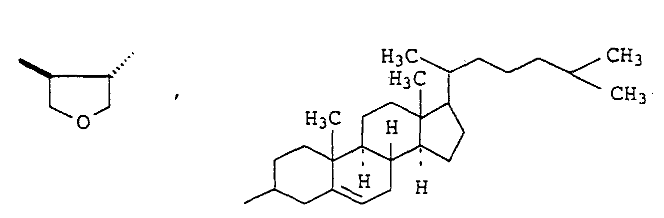

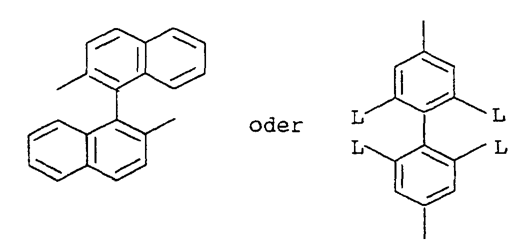

Chirale Verbindungen, enthaltend diese sowie weitere geeignete chirale Reste sind beispielsweise in den Schriften WO 95/16007, DE-A 1 95 20 660, DE-A 1 95 20 704 und der älteren deutschen Patentanmeldung 198 43 724.2 genannt.

Die erfindungsgemäßen flüssigkristallinen Stoffgemenge enthalten neben Komponente A) und ihren entsprechenden Bevorzugungen noch Komponente B), in welcher mindestens ein Photoinitiator (b1)), mindestens ein Reaktivverdünner (b2)), welcher photopolymerisierbare Gruppen enthält, und gegebenenfalls Verdünnungsmittel (b3)) enthalten sind, sowie gegebenenfalls noch weitere Zusätze ausgewählt aus der Gruppe bestehend aus den Komponenten C), D) und E).

Bevorzugte erfindungsgemäße Stoffgemenge enthalten neben Komponente A) und ihren entsprechenden Bevorzugungen und Komponente B), in welcher mindestens ein Photoinitiator (b1)), mindestens ein Reaktivverdünner (b2)), welcher photopolymerisierbare Gruppen enthält, und gegebenenfalls Verdünnungsmittel (b3)) enthalten sind, noch Komponente C) sowie gegebenenfalls noch weitere Zusätze ausgewählt aus der Gruppe bestehend aus den Komponenten D) und E) .

Als Photoinitiatoren (b1)) kommen beispielsweise solche unter den Markennamen Lucirin®, Irgacure® und Darocure® kommerziell verfügbaren Substanzen in Frage. Bevorzugt werden die Initiatoren Lucirin® TPO, Irgacure® 184, Irgacure® 369, Irgacure® 907 und Darocure® 1173 verwendet.

Die Photoinitiatoren werden üblicherweise in einem Anteil von etwa 0,5 bis 5,0 Gew.-% bezogen auf das Gesamtgewicht des flüssigkristallinen Stoffgemenges eingesetzt.

Zu den Reaktivverdünnern, welche üblicherweise zur Photopolymerisation befähigt sind, zählen beispielsweise mono-, bi- oder polyfunktionelle Verbindungen mit mindestens einer olefinischen Doppelbindungen. Beispiele hierfür sind Vinylester von Carbonsäuren, wie z.B. der Laurin-, Myristin-, Palmitin- oder Stearinsäure, oder von Dicarbonsäuren, wie z.B. der Bernsteinsäure und Adipinsäure, Allyl- oder Vinylether oder Methacryl- oder Acrylsäureester monofunktioneller Alkohole, wie z.B. des Lauryl-, Myristyl-, Palmityl- oder Stearylalkohols, oder Diallyl- oder Divinylether bifunktioneller Alkohole, wie z.B. des Ethylenglycols und des Butan-1,4- diols.

Weiter kommen z.B. in Frage Methacryl- oder Acrylsäureester polyfunktioneller Alkohole, insbesondere solcher, welche neben den Hydroxylgruppen keine weiteren funktionellen Gruppen oder allenfalls Ethergruppen enthalten. Beispiele solcher Alkohole sind z.B. bifunktionelle Alkohole, wie Ethylenglykol, Propylenglykol, und deren höher kondensierte Vertreter, wie z.B. Diethylenglykol, Triethylenglykol, Dipropylenglykol, Tripropylenglykol etc., Butandiol, Pentandiol, Hexandiol, Neopentylglykol, alkoxylierte phenolische Verbindungen, wie ethoxylierte bzw. propoxylierte Bisphenole, Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole.

Als Reaktivverdünner b2) kommen weiter in Frage Polyester(meth)acrylat, wobei es sich hierbei um die (Meth)acrylsäureester von Polyesterolen handelt.

Als Polyesterole kommen beispielsweise solche in Betracht, die durch Veresterung von Polycarbonsäuren, vorzugsweise Dicarbonsäuren, mit Polyolen, vorzugsweise Diolen, hergestellt werden können. Die Ausgangsstoffe für solche hydroxylgruppenhaltige Polyester sind dem Fachmann bekannt. Als Dicarbonsäuren können Bernsteinsäure, Glutarsäure, Adipinsäure, Sebacinsäure, o-Phthalsäure und deren Isomere und Hydrierungsprodukte, sowie veresterbare oder umesterbare Derivate der genannten Säuren, wie z.B. Anhydride oder Dialkylester eingesetzt werden. Als Polyole kommen die oben genannten Alkohole, vorzugsweise Ethylenglykol, 1,2- und 1,3-Propylenglykol, 1,4-Butandiol, 1,6-Hexandiol, Neopentylglykol, Cyclohexandimethanol sowie Polyglykole vom Typ des Ethylenglykols und Propylenglykols in Betracht.

Weiterhin kommen als Reaktivverdünner b2) in Frage 1,4-Divinylbenzol, Triallylcyanurat, Acrylsäureester des Tricyclodecenylalkohols der nachstehenden Formel 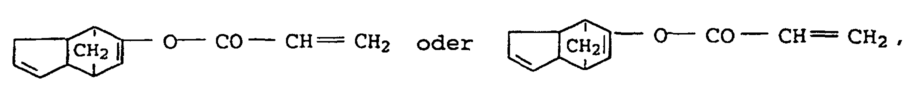 auch bekannt unter dem Namen Dihydrodicyclopentadienylacrylat, sowie die Allylester der Acrylsäure, der Methacrylsäure und der Cyanacrylsäure.

Unter den exemplarisch genannten Reaktivverdünnern b2) werden insbesondere und im Hinblick auf die oben angesprochenen bevorzugten Stoffgemenge solche verwendet, welche photopolymerisierbare Gruppen enthalten.

Setzt man Reaktivverdünner ein, so müssen deren Menge und Eigenschaften so an die jeweiligen Verhältnisse angepaßt werden, daß einerseits ein zufriedenstellender gewünschter Effekt, z.B. die erwünschte Farbe der erfindungsgemäßen Stoffgemenge, erreicht wird, andererseits das Phasenverhalten des flüssigkristallinen Stoffgemenges jedoch nicht zu stark beeinträchtigt wird. Für die Herstellung niedrigvernetzender (hochvernetzender) flüssigkristalliner Stoffgemenge kann man beispielsweise entsprechende Reaktivverdünner verwenden, welche eine relativ geringe (hohe) Anzahl an reaktiven Einheiten je Molekül besitzen.

Die Reaktivverdünner werden üblicherweise in einem Anteil von etwa 0,5 bis 20,0 Gew.-% bezogen auf das Gesamtgewicht des flüssigkristallinen Stoffgemenges eingesetzt.

Es sei hier erwähnt, daß natürlich ergänzend (oder alternativ) für die Herstellung niedrigvernetzender (hochvernetzender) flüssigkristalliner Stoffgemenge auch flüssigkristalline Mischungen (Komponente A)) zum Einsatz kommen können, welche einen relativ hohen (niedrigen) Anteil an Verbindungen der Formel Ib mit nicht zur Polymerisation befähigten Resten P enthalten.

In die Gruppe b3) der Verdünnungsmittel fallen beispielsweise
C₁-C₄-Alkohole, wie z.B. Methanol, Ethanol, n-Propanol, Isopropanol, Butanol, Isobutanol, sec-Butanol sowie insbesondere die C₅-C₁₂-Alkohole n-Pentanol, n-Hexanol, n-Heptanol, n-Octanol, n-Nonanol, n-Decanol, n-Undecanol und n-Dodecanol und deren Isomere,
Glykole, wie z.B. 1,2-Ethylenglykol, 1,2- oder 1,3-Propylenglykol, 1,2-, 2,3- oder 1,4-Butylenglykol, Di- oder Triethylenglykol oder Di- oder Tripropylenglykol,
Ether, wie z.B. Methyl-tert-butylether, 1,2-Ethylenglykolmonooder -dimethylether, 1,2-Ethylenglykolmono- oder -diethylether, 3-Methoxypropanol, 3-Isopropoxypropanol, Tetrahydrofuran oder Dioxan,
Ketone, wie z.B. Aceton, Methylethylketon, Methylisobutylketon oder Diacetonalkohol (4-Hydroxy-4-methyl-2-pentanon),
C₁-C₅-Alkylester, wie z.B. Essigsäuremethylester, Essigsäureethylester, Essigsäurepropylester, Essigsäurebutylester oder Essigsäureamylester,
aliphatische oder aromatische Kohlenwasserstoffe wie z.B. Pentan, Hexan, Heptan, Octan, Isooctan, Petrolether, Toluol, Xylol, Ethylbenzol, Tetralin, Dekalin, Dimethylnaphthalin, Testbenzin, Shellsol® oder Solvesso®
Mineralöle, wie z.B. Benzin, Kerosin, Dieselöl oder Heizöl,
aber auch natürliche Öle, wie z.B. Olivenöl, Sojaöl, Rapsöl, Leinöl oder Sonnenblumenöl.

Selbstverständlich kommen auch Mischungen dieser Verdünnungsmittel für die Verwendung in den erfindungsgemäßen Stoffgemengen in Betracht.

Sofern zumindest eine teilweise Mischbarkeit gegeben ist können diese Verdünnungsmittel auch mit Wasser gemischt werden. In Frage kommen hierbei etwa C₁-C₄-Alkohole, z.B. Methanol, Ethanol, n-Propanol, Isopropanol, Butanol, Isobutanol oder sec-Butanol, Glykole, z.B. 1,2-Ethylenglykol, 1,2- oder 1,3-Propylenglykol, 1,2-, 2,3- oder 1,4-Butylenglykol, Di- oder Triethylenglykol oder Dioder Tripropylenglykol, Ether, z.B. Tetrahydrofuran oder Dioxan, Ketone, z.B. Aceton, Methylethylketon oder Diacetonalkohol (4-Hydroxy-4-methyl-2-pentanon), oder C₁-C₄-Alkylester, wie z.B. Essigsäuremethyl-, -ethyl-, -propyl- oder -butylester in Betracht.

Solche wasserhaltigen Mischungen besitzen oftmals eine begrenzte Mischbarkeit mit unpolareren Verdünnungsmittel, wie z.B. den bereits genannten aliphatischen oder aromatischen Kohlenwasserstoffen, Mineralölen aber auch natürlichen Ölen, wodurch sich dann auch ternäre (oder quasiternäre) Verdünnungsmittel aus Wasser, mit Wasser zumindest teilweise mischbaren und mit Wasser unmischbaren Verdünnungsmitteln herstellen und verwenden lassen.

Die Verdünnungsmittel werden üblicherweise in einem Anteil von etwa 0,5 bis 10,0 Gew.-%, vorzugsweise von etwa 1,0 bis 5,0 Gew.-% bezogen auf das Gesamtgewicht des flüssigkristallinen Stoffgemenges eingesetzt.

Die unter Komponente C) aufgeführten Entschäumer und Entlüfter (c1)), Gleit- und Verlaufshilfsmittel (c2)), thermisch härtenden oder strahlenhärtenden Hilfsmittel (c3)), Substratnetzhilfsmittel (c4)), Netz- und Dispergierhilfsmittel (c5)), Hydrophobierungsmittel (c6)), Haftvermittler (c7)) und Hilfsmittel zur Verbesserung der Kratzfestigkeit (c8)) lassen sich in ihrer Wirkung meist nicht streng voneinander abgrenzen. So wirken Gleit- und Verlaufshilfsmittel oftmals zusätzlich als Entschäumer und/oder Entlüfter und/oder als Hilfsmittel zur Verbesserung der Kratzfestigkeit. Strahlenhärtende Hilfsmittel können wiederum als Gleit- und Verlaufshilfsmittel und/oder Entlüfter und/oder auch als Substratnetzhilfsmittel wirken. Im Einzelfall können manche dieser Hilfsmittel auch die Funktion eines Haftvermittlers (c8)) erfüllen.

Entsprechend dem zuvor Gesagten kann daher ein bestimmtes Additiv mehreren der nachfolgend beschriebenen Gruppen c1) bis c8) zugeordnet sein.

Unter den Entschäumern der Gruppe c1) finden sich siliciumfreie und siliciumhaltige Polymere. Bei den siliciumhaltigen Polymeren handelt es sich beispielsweise um unmodifizierte oder modifizierte Polydialkylsiloxane oder um verzweigte Copolymere, Kammoder Blockcopolymere aus Polydialkylsiloxan- und Polyethereinheiten, wobei letztere aus Ethylen- oder Propylenoxid zugänglich sind.

Zu den Entlüftern der Gruppe c1) gehören beispielsweise organische Polymere, wie etwa Polyether und Polyacrylate, Dialkyl-, insbesondere Dimethylpolysiloxane, organisch modifizierte Polysiloxane, wie etwa arylalkylmodifizierte Polysiloxane oder auch Fluorsilicone.

Die Wirkung von Entschäumern beruht im wesentlichen darauf, Schaumbildung zu verhindern oder bereits gebildeten Schaum zu zerstören. Entlüfter wirken im wesentlichen in der weise, daß sie die Koaleszenz feinverteilter Gas- bzw. Luftblasen zu größeren Blasen im zu entlüftenden Medium, beispielsweise den erfindungsgemäßen Stoffgemengen, fördern und damit das Entweichen des Gases (der Luft) beschleunigen. Da oftmals Entschäumer auch als Entlüfter eingesetzt werden können und umgekehrt, wurden diese Additive gemeinsam unter Gruppe c1) subsummiert.

Solche Hilfsmittel sind beispielsweise kommerziell von der Firma Tego als TEGO® Foamex 800, TEGO® Foamex 805, TEGO® Foamex 810, TEGO® Foamex 815, TEGO® Foamex 825, TEGO® Foamex 835, TEGO® Foamex 840, TEGO® Foamex 842, TEGO® Foamex 1435, TEGO® Foamex 1488, TEGO® Foamex 1495, TEGO® Foamex 3062, TEGO® Foamex 7447, TEGO® Foamex 8020, Tego® Foamex N, TEGO® Foamex K 3, TEGO® Antifoam 2-18,TEGO® Antifoam 2-18, TEGO® Antifoam 2-57, TEGO® Antifoam 2-80, TEGO® Antifoam 2-82, TEGO® Antifoam 2-89, TEGO® Antifoam 2-92, TEGO® Antifoam 14, TEGO® Antifoam 28, TEGO® Antifoam 81, TEGO® Antifoam D 90, TEGO® Antifoam 93, TEGO® Antifoam 200, TE-GO® Antifoam 201, TEGO® Antifoam 202, TEGO® Antifoam 793, TEGO® Antifoam 1488, TEGO® Antifoam 3062, TEGOPREN® 5803, TEGOPREN® 5852, TEGOPREN® 5863, TEGOPREN® 7008, TEGO® Antifoam 1-60, TEGO® Antifoam 1-62, TEGO® Antifoam 1-85, TEGO® Antifoam 2-67, TEGO® Antifoam WM 20, TEGO® Antifoam 50, TEGO® Antifoam 105, TEGO® Antifoam 730, TEGO® Antifoam MR 1015, TEGO® Antifoam MR 1016, TE-GO® Antifoam 1435, TEGO® Antifoam N, TEGO® Antifoam KS 6, TEGO® Antifoam KS 10, TEGO® Antifoam KS 53, TEGO® Antifoam KS 95, TE-GO® Antifoam KS 100, TEGO® Antifoam KE 600, TEGO® Antifoam KS 911, TEGO® Antifoam MR 1000, TEGO® Antifoam KS 1100, Tego® Airex 900, Tego® Airex 910, Tego® Airex 931, Tego® Airex 935, Tego® Airex 960, Tego® Airex 970, Tego® Airex 980 und Tego® Airex 985 und von der Firma BYK als BYK®-011, BYK®-019, BYK®-020, BYK®-021, BYK®-022, BYK®-023, BYK®-024, BYK®-025, BYK®-027, BYK®-031, BYK®-032, BYK®-033, BYK®-034, BYK®-035, BYK®-036, BYK®-037, BYK®-045, BYK®-051, BYK®-052, BYK®-053, BYK®-055, BYK®-057, BYK®-065, BYK®-066, BYK®-070, BYK®-080, BYK®-088, BYK®-141 und BYK®-A 530 erhältlich.

Die Hilfsmittel der Gruppe c1) werden üblicherweise in einem Anteil von etwa 0,05 bis 3,0 Gew.-%, vorzugsweise von etwa 0,5 bis 2,0 Gew.-% bezogen auf das Gesamtgewicht des flüssigkristallinen Stoffgemenges eingesetzt.

In die Gruppe c2) der Gleit- und Verlaufshilfsmittel gehören typischerweise siliciumfreie aber auch siliciumhaltige Polymere, wie z.B. Polyacrylate oder modifizierte, niedermolekulare Polydialkylsiloxane. Die Modifizierung besteht darin, daß ein Teil der Alkylgruppen durch verschiedenste organische Reste ersetzt ist. Bei diesen organischen Resten handelt es sich beispielsweise um Polyether, Polyester oder auch langkettige Alkylreste, wobei erstere am häufigsten Verwendung finden.

Die Polyetherreste der entsprechend modifizierten Polysiloxane werden dabei üblicherweise über Ethylen- und/oder Propylenoxideinheiten aufgebaut. Je höher der Anteil an diesen Alkylenoxideinheiten im modifizierten Polysiloxan ist, desto hydrophiler ist in der Regel das resultierende Produkt.

Solche Hilfsmittel sind beispielsweise kommerziell von der Firma Tego als TEGO® Glide 100, TEGO® Glide ZG 400, TEGO® Glide 406, TEGO® Glide 410, TEGO® Glide 411, TEGO® Glide 415, TEGO® Glide 420, TEGO® Glide 435, TEGO® Glide 440, TEGO® Glide 450, TEGO® Glide A 115, TEGO® Glide B 1484 (auch als Entschäumer und Entlüfter einsetzbar), TEGO® Flow ATF, TEGO® Flow 300, TEGO® Flow 460, TEGO® Flow 425 und TEGO® Flow ZFS 460. Als strahlenhärtbare Gleit- und Verlaufshilfsmittel, welche darüber hinaus auch der Verbesserung der Kratzfestigkeit dienen, lassen sich die ebenfalls von der Firma Tego erhältlichen Produkte TEGO® Rad 2100, TEGO® Rad 2200, TEGO® Rad 2500, TEGO® Rad 2600 und TEGO® Rad 2700 einsetzen.

Von der Firma BYK sind solche Hilfsmittel beispielsweise als BYK®-300 BYK®-306, BYK®-307, BYK®-310, BYK®-320, BYK®-333, BYK®-341, Byk® 354 und Byk® 361 erhältlich.

Die Hilfsmittel der Gruppe c2) werden üblicherweise in einem Anteil von etwa 0,05 bis 3,0 Gew.-%, vorzugsweise von etwa 0,5 bis 2,0 Gew.-% bezogen auf das Gesamtgewicht des flüssigkristallinen Stoffgemenges eingesetzt.

In die Gruppe c3) gehören als strahlenhärtende Hilfsmittel vor allem Polysiloxane mit endständigen Doppelbindungen, welche z.B. Bestandteil einer Acrylatgruppe sind. Solche Hilfsmittel können durch aktinische oder z.B. Elektronenstrahlung zur Vernetzung gebracht werden. Diese Hilfsmittel vereinen in der Regel mehrere Eigenschaften auf sich. Sie können im unvernetzten Zustand als Entschäumer, Entlüfter, Gleit- und Verlaufshilfsmittel und/oder Substratnetzhilfsmittel wirken, im vernetzten Zustand erhöhen sie vor allem die Kratzfestigkeit z.B. von Beschichtungen oder Filmen, welche mit den erfindungsgemäßen Stoffgemengen hergestellt werden können. Die Verbesserung des Glanzverhaltens, z.B. ebensolcher Beschichtungen oder Filme ist dabei im Wesentlichen als Folge der Wirkung dieser Hilfsmittel als Entschäumer, Entlüfter und/oder Gleit- und Verlaufshilfsmittel (im unvernetzten Zustand) zu sehen.

Als strahlenhärtende Hilfsmittel lassen sich beispielsweise die von der Firma Tego erhältlichen Produkte TEGO® Rad 2100, TEGO® Rad 2200, TEGO® Rad 2500, TEGO® Rad 2600 und TEGO® Rad 2700 und das von der Firma BYK erhältliche Produkt BYK®-371 einsetzen.

Thermisch härtende Hilfsmittel der Gruppe c3) enthalten beispielsweise primäre OH-Gruppen, welche mit Isocyanatgruppen z.B. des Bindemittels reagieren können.

Als thermisch härtende Hilfsmittel lassen sich beispielsweise die von der Firma BYK erhältlichen Produkt BYK®-370, BYK®-373 und BYK®-375 einsetzen.

Die Hilfsmittel der Gruppe c3) werden üblicherweise in einem Anteil von etwa 0,1 bis 5,0 Gew.-%, vorzugsweise von etwa 0,1 bis 3,0 Gew.-% bezogen auf das Gesamtgewicht des flüssigkristallinen Stoffgemenges eingesetzt.

Die Hilfsmittel der Gruppe c4) der Substratnetzhilfsmittel dienen vor allem der Erhöhung der Benetzbarkeit des Substrats, welches etwa durch Druckfarben oder Beschichtungsmittel, z.B. erfindungsgemäße Stoffgemenge, bedruckt oder beschichtet werden soll. Die damit in der Regel einhergehende Verbesserung des Gleit- und Verlaufsverhaltens solcher Druckfarben oder Beschichtungsmittel wirkt sich auf das Erscheinungsbild des fertigen (z.B. vernetzten) Drucks bzw. der fertigen (z.B. vernetzten) Schicht aus.

Verschiedenste solcher Hilfsmittel sind kommerziell beispielsweise von der Firma Tego als TEGO® Wet KL 245, TEGO® Wet 250, TE-GO® Wet 260 und TEGO® Wet ZFS 453 und von der Firma BYK als BYK®-306, BYK®-307, BYK®-310, BYK®-333, BYK®-344, BYK®-345, BYK®-346 und Byk®-348 erhältlich.

Die Hilfsmittel der Gruppe c4) werden üblicherweise in einem Anteil von etwa 0,05 bis 3,0 Gew.-%, vorzugsweise von etwa 0,1 bis 1,5 Gew.-% bezogen auf das Gesamtgewicht des flüssigkristallinen Stoffgemenges eingesetzt.

Die Hilfsmittel der Gruppe c5) der Netz- und Dispergierhilfsmittel dienen vor allem der Verhinderung des Aus- und Aufschwimmens sowie des Absetzens von Pigmenten und kommen daher, sofern nötig, vor allem bei pigmentierten erfindungsgemäßen Stoffgemengen in Frage.

Diese Hilfsmittel stabilisieren Pigmentdispersionen im wesentlichen durch elektrostatische Abstoßung und/oder sterische Hinderung der additiverten Pigmentteilchen, wobei in letzterem Fall die Wechselwirkung des Hilfsmitels mit dem umgebenden Medium (z.B. Bindemittel) eine größere Rolle spielt.

Da die Verwendung solcher Netz- und Dispergierhilfsmittel, z.B. auf dem technischen Gebiet der Druckfarben und Anstrichmittel, gängige Praxis ist, bereitet im gegebenen Fall die Auswahl solch eines geeigneten Hilfsmittels dem Fachmann in der Regel keine Schwierigkeiten.

Solche Netz- und Dispergierhilfsmittel werden kommerziell beispielsweise von der Firma Tego als TEGO® Dispers 610, TEGO® Dispers 610 S, TEGO® Dispers 630, TEGO® Dispers 700, TEGO® Dispers 705, TEGO® Dispers 710, TEGO® Dispers 720 W, TEGO® Dispers 725 W, TEGO® Dispers 730 W, TEGO® Dispers 735 W und TEGO® Dispers 740 W sowie von der Firma BYK als Disperbyk®, Disperbyk®-107, Disperbyk®-108, Disperbyk®-110, Disperbyk®-111, Disperbyk®-115, Disperbyk®-130, Disperbyk®-160, Disperbyk®-161, Disperbyk®-162, Disperbyk®-163, Disperbyk®-164, Disperbyk®-165, Disperbyk®-166, Disperbyk®-167, Disperbyk®-170, Disperbyk®-174, Disperbyk®-180, Disperbyk®-181, Disperbyk®-182, Disperbyk®-183, Disperbyk®-184, Disperbyk®-185, Disperbyk®-190, Anti-Terra®-U, Anti-Terra®-U 80, Anti-Terra®-P, Anti-Terra®-203, Anti-Terra®-204, Anti-Terra®-206, BYK®-151, BYK®-154, BYK®-155, BYK®-P 104 S, BYK®-P 105, Lactimon®, Lactimon®-WS und Bykumen® angeboten.

Die Dosierung der Hilfsmittel der Gruppe c5) hängt hauptsächlich von der zu belegenden Oberfläche der Pigmente und vom mittleren Molgewicht des Hilfsmittels ab.

Für anorganische Pigmente und niedermolekulare Hilfsmittel rechnet man üblicherweise mit einem Anteil an letzterem von etwa 0,5 bis 2,0 Gew.-% bezogen auf das Gesamtgewicht aus Pigment und Hilfsmittel. Im Falle hochmolekularer Hilfsmittel erhöht sich der Anteil auf etwa 1,0 bis 30 Gew.-%.

Bei organischen Pigmente und niedermolekularen Hilfsmittel liegt der Anteil an letzterem bei etwa 1,0 bis 5,0 Gew.-% bezogen auf das Gesamtgewicht aus Pigment und Hilfsmittel. Im Falle hochmolekularer Hilfsmittel kann dieser Anteil zwischen etwa 10,0 bis 90 Gew.-% liegen.

In jedem Fall empfehlen sich daher Vorversuch, welche jedoch vom Fachmann in einfacher Weise bewerkstelligt werden können.

Die Hydrophobierungsmittel der Gruppe c6) können im Hinblick darauf verwendet werden, daß beispielsweise mit erfindungsgemäßen Stoffgemengen erzeugte Drucke oder Beschichtungen wasserabweisende Eigenschaften erhalten. Hierdurch ist ein Quellen durch Wasseraufnahme und damit eine Veränderung z.B. der optischen Eigenschaften solcher Drucke oder Beschichtungen nicht mehr möglich oder zumindest stark unterdrückt. Darüber hinaus kann man bei Verwendung der Stoffgemenge z.B. als Druckfarbe im Offsetdruck deren Wasseraufnahme verhindern oder zumindest stark eindämmen.

Kommerziell erhältlich sind solche Hydrophobierungsmittel beispielsweise von der Firma Tego als Tego® Phobe WF, Tego® Phobe 1000, Tego® Phobe 1000 S, Tego® Phobe 1010, Tego® Phobe 1030, Tego® Phobe 1010, Tego® Phobe 1010, Tego® Phobe 1030, Tego® Phobe 1040, Tego® Phobe 1050, Tego® Phobe 1200, Tego® Phobe 1300, Tego® Phobe 1310 und Tego® Phobe 1400.

Die Hilfsmittel der Gruppe c6) werden üblicherweise in einem Anteil von etwa 0,05 bis 5,0 Gew.-%, vorzugsweise von etwa 0,1 bis 3,0 Gew.-% bezogen auf das Gesamtgewicht des flüssigkristallinen Stoffgemenges eingesetzt.

Haftvermittler der Gruppe c7) dienen der Verbesserung der Haftung zweier in Kontakt stehender Grenzflächen. Hieraus wird direkt ersichtlich, daß im wesentlichen nur der Anteil des Haftvermittlers wirksam ist, welcher sich in der einen, der anderen oder in beiden Grenzflächen befindet. Will man auf ein festes Substrat beispielsweise flüssige oder pastöse Druckfarben, Beschichtungsoder Anstrichmittel aufbringen, so bedeutet dies in der Regel, daß man entweder letzteren die Haftvermittler direkt zusetzen oder das Substrat einer Vorbehandlung mit den Haftvermittlern unterziehen muß (auch als Primerung bezeichnet), d.h. daß man diesem Substrat geänderte chemische und/oder physikalisch Oberflächeneigenschaften verleiht.

Sofern das Substrat vorher mit einer Untergrundfarbe grundiert worden ist, bedeutet dies, daß die in Kontakt stehenden Grenzflächen nun jene der Untergrundfarbe einerseits und der Druckfarbe bzw. des Beschichtungs- oder Anstrichmittels andererseits sind. Somit spielen in diesem Fall nicht nur die Haftungseigenschaften zwischen Substrat und Untergrundfarbe sondern auch zwischen Untergrundfarbe und Druckfarbe bzw. Beschichtungs- oder Anstrichmittel eine Rolle für die Haftung des gesamten Verbundes auf dem Substrat.

Als Haftvermittler im weiteren Sinne können auch die bereits unter Gruppe c4) aufgeführten Substratnetzhilfsmittel angesprochen werden, jedoch besitzen diese in der Regel nicht dasselbe Vermögen zur Haftungsvermittlung.

Im Hinblick auf die unterschiedlichste physikalische und chemische Beschaffenheit von Substraten und von beispielsweise für ihre Bedruckung oder Beschichtung vorgesehenen Druckfarben, Beschichtungs- und Anstrichmitteln ist die Vielzahl von Haftvermittlersystemen nicht verwunderlich.

Haftvermittler auf Basis von Silanen sind beispielsweise 3-Aminopropyltrimethoxysilan, 3-Aminopropyltriethoxysilan, 3-Aminopropyl-methyldiethoxysilan, N-Aminoethyl-3-aminopropyltrimethoxysilan, N-Aminoethyl-3-aminopropyl-methyldimethoxysilan, N-Methyl-3-aminopropyl-trimethoxysilan, 3-Ureidopropyltriethoxysilan, 3-Methacryloyloxypropyltrimethoxysilan, 3-Glycidyloxypropyltrimethoxysilan, 3-Mercaptopropyltrimethoxysilan, 3-Chlorpropyltrimethoxysilan oder Vinyltrimethoxysilan. Diese und weitere Silane sind z.B. unter dem Markennamen DYNASILAN® von der Firma Hüls erhältlich.

Haftvermittler auf Basis von Titanaten/Zirkonaten und Titan-/Zirkoniumbisacetylacetonaten entsprechen beispielsweise den folgenden Formeln 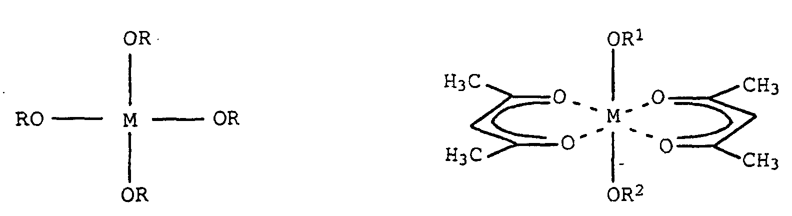 worin M für Titan oder Zirkonium steht und R, R¹ und R² C₁-C₄-Alkyl, wie z.B. i-Propyl oder n-Butyl bedeuten. Beispiele für solche Verbindungen sind etwa Tetra-i-propyltitanat, Tetra-n-butyltitanat, Titan-bis(acetylacetonat)-diisopropanolat, Titanbis(acetylacetonat)-dibutanolat, Titan-bis(acetylacetonat)-monobutanolat-monoisopropanolat oder Titan-bis(acetylacetonat)-monoethanolat-monoisopropanolat.

Weitere als Haftvermittler verwendbare Titan- und Zirkoniumverbindungen sind n-Butylpolytitanat, Isopropyltriisostearoyltitanat, Isopropyl-tris(N-ethylaminoethylamino)titanat und Zirkoniumbis(diethylcitrat)-diisopropanolat

Solche und weitere Titan- und Zirkoniumverbindungen sind z.B. unter den Markennamen TYZOR® (Firma DuPont), Ken-React® (Firma Kenrich Petrochemicals Inc.) und Tilcom® (Firma Tioxide Chemicals) erhältlich.

Als Haftvermittler können auch Zirkoniumaluminate dienen, wie sie z.B. unter dem Markennamen Manchem® (Firma Rhône Poulenc) erhältlich sind.

Weiter kommen beispielsweise als haftvermittelnde Additive in Druckfarben oder Anstrichmitteln in Frage chlorierte Polyolefine (z.B. von den Firmen Eastman Chemical und Toyo Kasei erhältlich), Polyester (z.B. von den Firmen Hüls AG, BASF Aktiengesellschaft, Gebr. Borchers AG, Pluess-Staufer AG, Hoechst AG und Worlee erhältlich), Verbindungen auf Basis von Saccharose, beispielsweise Sucrosebenzoat oder Sucroseacetoisobutyrat (letzteres z.B. von der Firma Eastman Chemical erhältlich), Phosphorsäureester (z.B. von den Firmen The Lubrizol Company und Hoechst AG erhältlich) und Polyethylenimine (z.B. von der Firma BASF Aktiengesellschaft erhältlich) und beispielsweise als haftvermittelnde Additive in Druckfarben für den Flexo-, Folien- und Verpackungsdruck Kolophoniumester (z.B. von der Firma Robert Kraemer GmbH erhältlich).

Üblicherweise wird man beispielsweise das zu bedruckende oder zu beschichtende Substrat entsprechend vorbehandeln, d.h. solche Additive als Primer zu verwenden.

Von den Herstellern solcher Additive sind hierfür entsprechende technische Informationen in der Regel in Erfahrung zu bringen oder der Fachmann kann durch entsprechende Vorversuche diese Informationen in einfacher Weise erhalten.

Sollen diese Additive jedoch als Hilfsmittel der Gruppe c7) den erfindungsgemäßen Stoffgemengen zugegeben werden, so entspricht deren Anteil üblicherweise etwa 0,05 bis 5,0 Gew.-% bezogen auf das Gesamtgewicht des flüssigkristallinen Stoffgemenges. Diese Konzentrationsangaben dienen hierbei lediglich als Anhaltspunkt, da Menge und Identität des Additivs im Einzelfäll durch die Natur des Substrats und des Bedruckungs-/Beschichtungsmittels bestimmt sind. Üblicherweise sind von den Herstellern solcher Additive für diesen Fall entsprechende technische Informationen verfügbar oder lassen sich vom Fachmann durch entsprechende Vorversuche in einfacher Weise ermitteln.

In die Gruppe c8) der Hilfsmittel zur Verbesserung der Kratzfestigkeit gehören beispielsweise die von der Firma Tego erhältlichen und bereits oben genannten Produkte TEGO® Rad 2100, TEGO® Rad 2200, TEGO® Rad 2500, TEGO® Rad 2600 und TEGO® Rad 2700.

Für diese Hilfsmittel kommen ebenfalls die in Gruppe c3) genannten Mengenangaben in Betracht, d.h. diese Additive werden üblicherweise in einem Anteil von etwa 0,1 bis 5,0 Gew.-%, vorzugsweise von etwa 0,1 bis 3,0 Gew.-% bezogen auf das Gesamtgewicht des flüssigkristallinen Stoffgemenges eingesetzt.

In die Gruppe d1) der Farbstoffe gehören beispielsweise Farbstoffe aus der Klasse der Monoazofarbstoffe, Isoindolinderivate, Derivate der Naphthalin- oder Perylentetracarbonsäure, Thioindigoderivate, Azomethinderivate, Chinacridone, Dioxazine, Pyrazolochinazolone und basische Farbstoffe wie Triarylmethanfarbstoffe und deren Salze.

Den erfindungsgemäßen Stoffgemengen können insbesondere auch photochrome, thermochrome oder lumineszierende Farbstoffe sowie Farbstoffe, welche eine Kombination dieser Eigenschaften aufweisen, zugegeben werden. Unter fluoreszierenden Farbstoffen sind neben den typischen Fluoreszenzfarbstoffen auch optische Aufheller zu verstehen.

Letztere gehören z.B. der Klasse der Bisstyrylbenzole, insbesondere der Cyanostyrylverbindungen, an und entsprechen der Formel

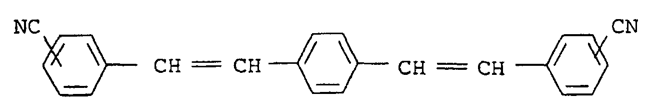

Weitere geeignete optische Aufheller aus der Klasse der Stilbene besitzen z.B. die Formeln 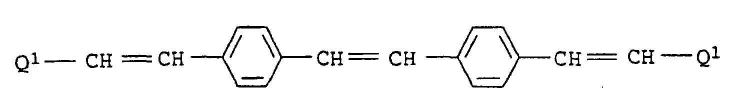 und 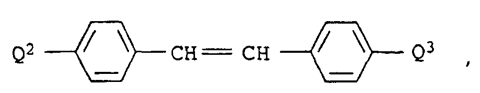 worin Q¹ jeweils C₁-C₄-Alkoxycarbonyl oder Cyano, Q² Benzoxazol-2-yl, das ein- oder zweifach durch C₁-C₄-Alkyl, insbesondere Methyl substituiert sein kann, Q³ C₁-C₄-Alkoxycarbonyl oder 3-(C₁-C₄-Alkyl)-1,2,4-oxadiazol-3-yl.

Weitere geeignete optische Aufheller aus der Klasse der Benzoxazole gehorchen z.B. den Formeln 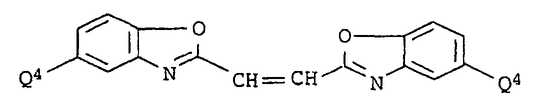 oder 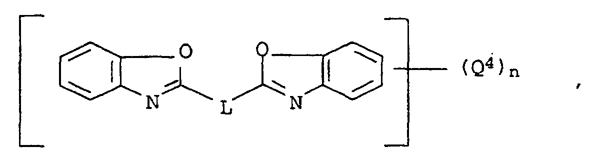 worin Q⁴ jeweils C₁-C₄-Alkyl, insbesondere Methyl, L einen Rest der Formel 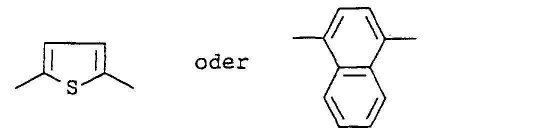 und n einen ganzzahligen Wert von 0 bis 2 bedeuten.

Geeignete optische Aufheller aus der Klasse der Cumarine besitzen z.B. die Formel 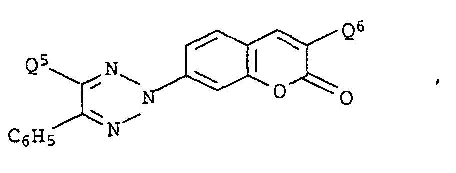 in der
- Q⁵: C₁-C₄-Alkyl und
- Q⁶: Phenyl oder 3-Halogenpyrazol-1-yl, insbesondere 3-Chlorpyrazol-1-yl, bedeuten.
weitere geeignete optische Aufheller aus der Klasse der Pyrene entsprechen z.B. der Formel 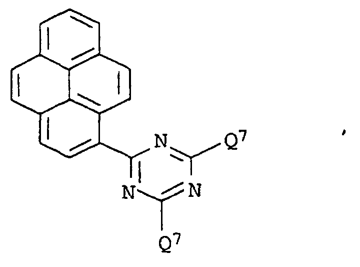 in der
- Q⁷: jeweils C₁-C₄-Alkoxy, insbesondere Methoxy, bedeutet.

Die obengenannten Aufheller können sowohl alleine als auch in Mischung miteinander angewendet werden.

Bei den obengenannten optischen Aufhellern handelt es sich in der Regel um an sich bekannte und handelsübliche Produkte. Sie sind beispielsweise in Ullmann's Encyclopedia of Industrial Chemistry, 5. Auflage, Band A18, Seiten 156 bis 161, beschrieben oder können nach den dort genannten Methoden erhalten werden.

Insbesondere verwendet man, sofern dies gewünscht ist, einen oder mehrere optische Aufheller aus der Klasse der Bisstyrylbenzole, insbesondere der Cyanostyrylbenzole.

Letztere können als Einzelverbindungen, aber auch als Mischung der isomeren Verbindungen zur Anwendung gelangen.

Die Isomeren entsprechen dabei den Formeln 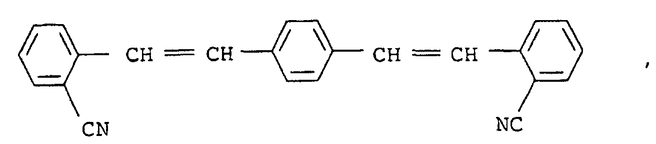 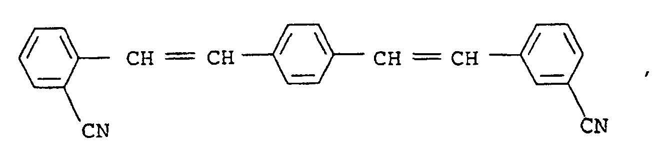 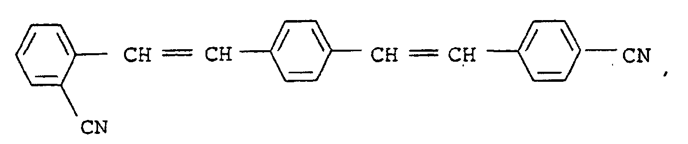 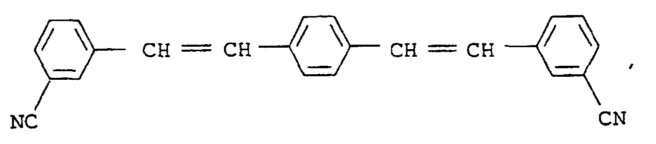 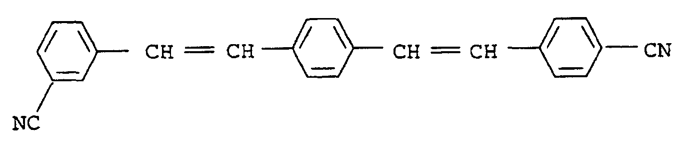 und

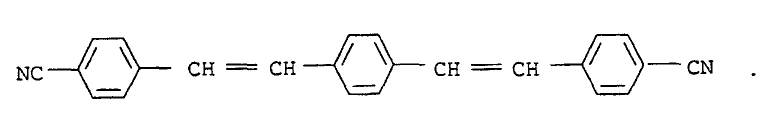

Optische Aufheller werden beispielsweise kommerziell als Ultraphor® SF 004, Ultraphor® SF MO, Ultraphor® SF MP und Ultraphor® SF PO von der Firma BASF vertrieben.

Geeignete Fluoreszenzfarbstoffe sind beispielsweise Perylenderivate, die in den Offenlegungsschriften DE 32 35 526, DE 34 00 991, DE 34 34 059 und DE 35 45 004, der europäischen Patentanmeldung 0 033 079 und der europäischen Patentschrift 0 055 363 beschrieben sind.

Fluoreszenzfarbstoffe werden z.B. als Lumogen® Yellow 083, Lumogen@ Orange 240, Lumogen® Red 300, Lumogen® Violet 570 und Thermoplast@ F Yellow 084 von der Firma BASF vertrieben.

In die Gruppe d2) der Pigmente gehören sowohl anorganische als auch organische Pigmente. Einen Überblick über anorganische Buntpigmente, welche in den erfindungsgemäßen Stoffgemengen zur Verwendung kommen können, gibt das Buch von H. Endriß "Aktuelle anorganische Bunt-Pigmente" (Herausgeber U. Zorll, Curt-R.-Vincentz-Verlag Hannover (1997)). Darüber hinaus kommen als weitere Pigmente, welche im zuvor genannten Buch nicht aufgeführt sind, auch Pigment Black 6 und Pigment Black 7 (Ruß), Pigment Black 11 (Eisenoxidschwarz, Fe₃O₄), Pigment White 4 (Zinkoxid, ZnO), Pigment White 5 (Lithopone, ZnS/BaSO₄), Pigment White 6 (Titanoxid, TiO₂) und Pigment White 7 (Zinksulfid, ZnS) in Frage.

Einen Überblick über organische Pigmente, welche man den erfindungsgemäßen Stoffgemengen zugeben kann, liefert das Buch von W. Herbst und K. Hunger "Industrielle organische Pigmente - Herstellung, Eigenschaften, Anwendung" (VCH-Verlag Weinheim, New York, Basel, Cambridge, Tokyo, zweite Auflage (1995)).

Den erfindungsgemäßen Stoffgemengen können auch magnetische, elektrisch leitende, photochrome, thermochrome oder lumineszierende Pigmente sowie Pigmente, welche eine Kombination dieser Eigenschaften aufweisen, zugegeben werden.

Als Pigmente mit lumineszierenden Eigenschaften kommmen neben einigen organischen, wie z.B. Lumogen® Yellow 0790 (Fa. BASF Aktiengesellschaft), auch anorganische, dotierte oder undotierte Verbindungen in Frage, welche im wesentlichen auf Erdalkalimetalloxiden, Erdalkalimetall/Übergangsmetall-, Erdalkalimetall/Aluminium-, Erdalkalimetall/Silicium- oder Erdalkalimetall/Phosphoroxiden, Erdalkalimetallhalogeniden, Zn/Siliciumoxiden, Zn/Erdalkalimetallhalogeniden, Seltenerdmetalloxiden, Seltenerdmetall/Übergangsmetall-, Seltenerdmetall/Aluminium-, Seltenerdmetall/Silicium- oder Seltenerdmetall/Phosphoroxiden, Seltenerdmetalloxidsulfiden oder -oxidhalogeniden, Zinkoxid, -sulfid oder -selenid, Cadmiumoxid, -sulfid oder -selenid oder Zink/Cadmiumoxid, -sulfid oder -selenid basieren, wobei die cadmiumhaltigen Verbindungen wegen ihrer toxikologischen und ökologischen Relevanz an Bedeutung verlieren.

Als Dotierstoffe finden in diesen Verbindungen üblicherweise Aluminium, Zinn, Antimon, Seltenerdmetalle, wie Cer, Europium oder Terbium, Übergangsmetalle, wie Mangan, Kupfer, Silber oder Zink oder auch Kombinationen dieser Elemente Verwendung.

Exemplarisch sind nachfolgend lumineszierende Pigmente angegeben, wobei die Schreibweise "Verbindung:Element(e)" dem einschlägigen Fachmann zu verstehen gibt, daß die genannte Verbindung mit dem (den) entsprechenden Element(en) dotiert ist. Darüber hinaus bedeutet beispielsweise die Schreibweise "(P,V)", daß entsprechende Gitterplätze in der Festkörperstruktur des Pigments statistisch durch Phospor und Vanadium besetzt sind.

Beispiele solcher, zu Lumineszenz befähigter Verbindungen sind MgWO₄, CaWO₄, Sr₄Al₁₄O₂₅:Eu, BaMg₂Al₁₀O₂₇:Eu, MgAl₁₁O₁₉:Ce,Tb, MgSiO₃:Mn, Ca₁₀(PO₄)₆(F,Cl):Sb,Mn, (SrMg)₂P₂O₇:Eu, SrMg₂P₂O₇:Sn, BaFCl:Eu, Zn₂SiO₄:Mn, (Zn,Mg)F₂:Mn, Y₂O₃:Eu, YVO₄:Eu, Y(P,V)O₄:Eu, Y₂SiO₅:Ce,Tb, Y₂O₂S:Eu, Y₂O₂S:Tb, La₂O₂S:Tb, Gd₂O₂S:Tb, LaOBr:Tb, ZnO:Zn, ZnS:Mn, ZnS:Ag, ZnS/CdS:Ag, ZnS:Cu,Al, ZnSe:Mn, ZnSe:Ag und ZnSe:Cu.

Als Komponente E) der Licht-, Hitze- und/oder Oxidationsstabilisatoren sind beispielsweise zu nennen
alkylierte Monophenole, wie 2,6-Di-tert-butyl-4-methylphenol, 2-Tert-butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-tert-butyl-4-methoxymethylphenol, Nonylphenole, welche eine lineare oder verzweigte Seitenkette besitzen, beispielsweise 2,6-Di-nonyl-4-methylphenol, 2,4-Dimethyl-6-(1'-methylundec-1'-yl)-phenol, 2,4-Dimethyl-6-(1'-methylheptadec-1'-yl)phenol, 2,4-Dimethyl-6-(1'-methyltridec-1'-yl)phenol und Mischungen dieser Verbindungen, Alkylthiomethylphenole wie 2,4-Dioctylthiomethyl-6-tert-butylphenol, 2,4-Dioctylthiomethyl-6-methylphenol, 2,4-Dioctylthiomethyl-6-ethylphenol und 2,6-Di-dodecylthiomethyl-4-nonylphenol,
Hydrochinone und alkylierte Hydrochinone wie 2,6-Di-tert-butyl-4-methoxyphenol, 2,5-Di-tert-butylhydrochinon, 2,5-Di-tertamylhydrochinon, 2,6-Diphenyl-4-octadecyloxyphenol, 2,6-Di-tert-butylhydrochinon, 2,5-Di-tert-butyl-4-hydroxyanisol, 3,5-Di-tertbutyl-4-hydroxyanisol, 3,5-Di-tert-butyl-4-hydroxyphenylstearat und Bis-(3,5-di-tert-butyl-4-hydroxyphenyl)adipat,
Tocopherole wie α-Tocopherol, β-Tocopherol, γ-Tocopherol, δ-Tocopherol und Mischungen dieser Verbindungen, sowie Tocopherolderivate, wie beispielsweise Tocopherylacetat, -succinat, -nicotinat und -polyoxyethylensuccinat ("Tocofersolat"),
hydroxylierte Diphenylthioether wie 2,2'-Thiobis(6-tert-butyl-4-methylphenol), 2,2'-Thiobis(4-octylphenol), 4,4'-Thiobis(6-tert-butyl-3-methylphenol), 4,4'-Thiobis(6-tert-butyl-2-methylphenol), 4,4'-Thiobis-(3,6-di-sec-amylphenol) und 4,4'-Bis-(2,6-dimethyl-4-hydroxyphenyl)disulfid,
Alkylidenbisphenole wie 2,2'-Methylenbis(6-tert-butyl-4-methylphenol), 2,2'-Methylenbis-(6-tert-butyl-4-ethylphenol), 2,2'-Methylenbis[4-methyl-6-(α-methylcyclohexyl)phenol], 2,2'-Methylenbis(4-methyl-6-cyclohexylphenol), 2,2' -Methylenbis(6-nonyl-4-methylphenol), 2,2'-Methylenbis(4,6-di-tert-butylphenol), 2,2-Ethylidenbis(4,6-di-tert-butylphenol), 2,2'Ethylidenbis(6-tert-butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis(2,6-di-tert-butylphenol), 4,4'-Methylenbis-(6-tert-butyl-2-methylphenol), 1,1-Bis(5-tert-butyl-4-hydroxy-2-methylphenyl)butan, 2,6-Bis(3-tert-butyl-5-methyl-2-hydroxybenzyl) -4-methylphenol, 1,1,3-Tris(5-tert-butyl-4-hydroxy-2-methylphenyl)butan, 1,1-Bis(5-tert-butyl-4-hydroxy-2-methyl-phenyl)-3-n-dodecylmercaptobutan, Ethylenglycolbis[3,3-bis(3'-tertbutyl-4'-hydroxyphenyl)butyrat], Bis(3'-tert-butyl-4-hydroxy-5-methyl-phenyl)dicyclopentadien, Bis[2-(3'-tert-butyl-2'-hydroxy-5'methylbenzyl)-6-tert-butyl-4-methylphenyl]-terephthalat, 1,1-Bis-(3,5-dimethyl-2-hydroxyphenyl)butan, 2,2-Bis-(3,5-di-tert-butyl-4-hydroxyphenyl)propan, 2,2-Bis-(5-tert-butyl-4-hydroxy-2-methylphenyl)-4-n-dodecylmercaptobutan und 1,1,5,5-Tetrakis-(5-tert-butyl-4-hydroxy-2-methylphenyl)pentan,
O-, N- und S-Benzylverbindungen wie 3,5,3',5'-Tetra-tert-butyl-4,4' -dihydroxydibenzylether, Octadecyl-4-hydroxy-3,5-dimethylbenzylmercaptoacetat, Tridecyl-4-hydroxy-3,5-di-tert-butylbenzylmercaptoacetat, Tris(3,5-di-tert-butyl-4-hydroxybenzyl)-amin, Bis(4-tert-butyl-3-hydroxy-2,6-dimethylbenzyl)dithioterephthalat, Bis(3,5-di-tert-butyl-4-hydroxybenzyl)sulfid und Isooctyl-3,5-di-tert-butyl-4-hydroxybenzylmercaptoacetat,
aromatische Hydroxybenzylverbindungen wie 1,3,5-Tris-(3,5-ditert-butyl-4-hydroxybenzyl)-2,4,6-trimethylbenzol, 1,4-Bis(3,5-di-tert-butyl-4-hydroxybenzyl)-2,3,5,6-tetramethylbenzol und 2,4,6-Tris(3,5-di-tert-butyl-4-hydroxybenzyl)phenol,
Triazinverbindungen wie 2,4-Bis(octylmercapto)-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)- 1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)isocyanurat, 1,3,5-Tris(4-tert-butyl-3-hydroxy-2,6-dimethylbenzyl)isocyanurat, 2,4,6-Tris(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat und 1,3,5-Tris(2-hydroxyethyl)isocyanurat,
Benzylphosphonate wie Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat und Dioctadecyl-5-tert-butyl-4-hydroxy-3-methylbenzylphosphonat,
Acylaminophenole wie 4-Hydroxylauroylanilid, 4-Hydroxystearoylanilid und Octyl-N-(3,5-di-tert-butyl-4-hydroxyphenyl)carbamat,
Propion- und Essigsäureester beispielsweise von ein- oder mehrwertigen Alkoholen wie Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)isocyanurat, N,N'-Bis(hydroxyethyl)oxamid, 3-Thiaundecanol, 3-Thiapentadecanol, Trimethylhexandiol, Trimethylolpropan und 4-Hydroxymethyl-1-phospha-2,6,7-trioxabicyclo[2.2.2]-octan,
Propionsäureamide basierend auf Aminderivaten wie beispielsweise N,N'-Bis(3,5-di-tert-butyl-4-hydroxyphenylpropionyl)hexamethylendiamin, N,N'-Bis(3,5-di-tert-butyl-4-hydroxyphenylpropionyl)trimethylendiamin und N,N'-Bis(3,5-di-tert-butyl-4-hydroxyphenylpropionyl)hydrazin,
Ascorbinsäure (Vitamin C) und Ascorbinsäurederivate wie beispielsweise Ascorbylpalmitat, -laurat und -stearat sowie Ascorbylsulfat und -phosphat,
Antioxidantien auf Basis von Aminverbindungen wie N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenylp-phenylendiamin, N,N'-Bis-(2-naphthyl)-p-phenylendiamin, N-Isopropyl-N'-phenyl-p-phenylendiamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluolsulfamoyl)-diphenylamin, N,N'-Dimethyl-N,N'-di-sec-butyl-p-phenylendiamin, Diphenylamin, N-Allyldiphenylamin, 4-Isopropoxydiphenylamin, N-Phenyl-1-naphthylamin, N-(4-Tert-octylphenyl)-1-naphthylamin, N-Phenyl-2-naphthylamin, octylsubstituiertes Diphenylamin, wie beispielsweise p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylaminophenol, Bis[4-methoxyphenyl)amin, 2,6-Di-tert-butyl-4-dimethylaminomethylphenol, 2,4-Diaminodiphenylmethan, 4,4'-Diaminodiphenylmethan, N,N,N',N'-Tetramethyl-4,4'-di-aminidiphenylmethan, 1,2-Bis[(2-methylphenyl)-amino]ethan, 1,2-Bis(phenylamino)propan, (o-Tolyl)biguanid, Bis[4-(1',3'-dimethylbutyl)phenyl]amin, tert-octyl substituiertes N-Phenyl-1-naphthylamin, eine Mischung von mono- und dialkyliertem Tert-butyl/Tert-octyldiphenylamin, eine Mischung von monound dialkyliertem Nonyldiphenylamin, eine Mischung von mono- und dialkyliertem Dodecyldiphenylamin, eine Mischung von mono- und dialkyliertem Isopropyl/Isohexyldiphenylamin, eine Mischung von mono- und dialkyliertem Tert-butyldiphenylamin, 2,3-Dihydro-3,3-dimethyl-4H-1,4-benzothiazin, Phenothiazin, eine Mischung von mono- und dialkyliertem Tert-butyl/Tert-octylphenothiazin, eine Mischung von mono- und dialkyliertem Tert-octylphenothiazin, N-Allylphenothiazin, N,N,N',N'-Tetraphenyl-1,4-diaminobut-2-en, N,N-Bis(2,2,6,6-tetramethyl-piperidin-4-yl)-hexamethylendiamin, Bis(2,2,6,6-tetramethylpiperidin-4-yl)sebacat, 2,2,6,6-Tetramethylpiperidin-4-on und 2,2,6,6-Tetramethylpiperidin-4-ol,
Phosphite und Phosphonite wie Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis(2,4-di-tert-butylphenyl)-4,4'-biphenylendiphosphonit, 6-Isooctyloxy-2,4,8,10-tetra-tertbutyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert-butyl-6-methylphenyl)methylphosphit und Bis(2,4-di-tert-butyl-6-methylphenyl)ethylphosphit,
2-(2'-Hydroxyphenyl)-benzotriazole wie 2-(2'-Hydroxy-5'-methylphenyl)-benzotriazol, 2-(3',5'-Di-tert-butyl-2'-hydroxyphenyl)-benzotriazol, 2-(5'-Tert-butyl-2'-hydroxyphenyl)benzotriazol, 2-(2'-Hydroxy-5'-(1,1,3,3-tetramethylbutyl)phenyl)benzotriazol, 2-(3',5'-Di-tert-butyl-2'-hydroxyphenyl)-5-chloro-benzotriazol, 2-(3'-Tert-butyl-2'-hydroxy-5'-methylphenyl)-5-chloro-benzotriazol, 2-(3'-Sec-butyl-5'-tert-butyl-2'-hydroxyphenyl)-benzotriazol, 2-(2'-Hydroxy-4'-octyloxyphenyl)-benzotriazol, 2-(3',5'-Ditert-amyl-2'-hydroxyphenyl)-benzotriazol, 2-(3',5'-Bis-(α,α-dimethylbenzyl)-2'-hydroxyphenyl)-benzotriazol, eine Mischung von 2-(3'-Tert-butyl-2'-hydroxy-5'-(2-octyloxycarbonylethyl)phenyl)-5-chloro-benzotriazol, 2-(3'-Tert-butyl-5'-[2-(2-ethylhexyloxy)-carbonylethyl]-2'-hydroxyphenyl)-5-chloro-benzotriazol, 2-(3'-Tert-butyl-2'-hydroxy-5'-(2-methoxycarbonylethyl)phenyl)-5-chloro-benzotriazol, 2- (3'-Tert-butyl-2'-hydroxy-5'-(2-methoxycarbonylethyl)phenyl) -benzotriazol, 2- (3'-Tert-butyl-2'-hydroxy-5'-(2-octyloxycarbonylethyl)phenyl)-benzotriazol, 2-(3'-Tert-butyl-5'-[2-(2-ethylhexyloxy)carbonylethyl]-2' -hydroxyphenyl)-benzotriazol, 2- (3'-Dodecyl-2'-hydroxy-5'-methylphenyl)-benzotriazol und 2- (3'-Tert-butyl-2'-hydroxy-5'-(2-isooctyloxycarbonylethyl)-phenylbenzotriazol, 2,2'-Methylen-bis[4-(1,1,3,3-tetramethylbutyl)-6-benzotriazol-2-ylphenol]; das Produkt der vollständigen Veresterung von 2-[3'-Tert-butyl-5'-(2-methoxycarbonylethyl)-2'-hydroxyphenyl]-2H-benzotriazol mit Polyethylenglycol 300; [R-CH₂CH₂-COO(CH₂)₃⁆₂, mit R = 3'-Tert-butyl-4'-hydroxy-5'-2H-benzotriazol-2-ylphenyl],
schwefelhaltige Peroxidfänger bzw. schwefelhaltige Antioxidantien wie z.B. Ester der 3,3'-Thiodipropionsäure, beispielsweise die Lauryl-, Stearyl-, Myristyl- oder Tridecylester, Mercaptobenzimidazol oder das Zinksalz des 2-Mercaptobenzimidazol, Zinkdibutyldithiocarbamat, Dioctadecyldisulfid und Pentaerythritoltetrakis(β-dodecylmercapto)propionat,
2-Hydroxybenzophenone wie beispielsweise die 4-Hydroxy-, 4-Methoxy-, 4-Octyloxy-, 4-Decycloxy-, 4-Dodecyloxy-, 4-Benzyloxy-, 4,2',4'-Trihydroxy- und 2'-Hydroxy-4,4'-dimethoxy-Derivate,
Ester der unsubstituierten und substituierten Benzoesäure wie beispielsweise 4-Tert-butylphenylsalicylat, Phenylsalicylat, Octylphenylsalicylat, Dibenzoylresorcinol, Bis(4-tert-butylbenzoyl)resorcinol, Benzoylresorcinol, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat und 2-Methyl-4,6-di-tert-butylphenyl-3,5-di-tert-butyl-4-hydroxybenzoat,
Acrylate wie beispielsweise Ethyl-α-cyano-β,β-diphenylacrylat, Isooctyl-α-cyano-β,β-diphenylacrylat, Methyl-α-methoxycarbonylcinnamat, Methyl-α-cyano-β-methyl-p-methoxycinnamat, Butyl-α-cyano-β-methyl-p-methoxy-cinnamat und Methyl-α-methoxycarbonyl-p-methoxycinnamat,
sterisch gehinderte Amine wie beispielsweise Bis(2,2,6,6-tetramethylpiperidin-4-yl)sebacat, Bis(2,2,6,6-tetramethylpiperidin-4-yl)succinat, Bis(1,2,2,6,6-pentamethylpiperidin-4-yl)sebacat, Bis(1-octyloxy-2,2,6,6-tetramethylpiperidin-4-yl)sebacat, Bis(1,2,2,6,6-pentamethylpiperidin-4-yl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Bernsteinsäure, das Kondensationsprodukt N,N'-Bis(2,2,6,6-tetramethylpiperidin-4-yl)hexamethylendiamin und 4-Tert-octylamino-2,6-dichloro-1,3,5-triazin, Tris(2,2,6,6-tetramethylpiperidin-4-yl)nitrilotriacetat, Tetrakis(2,2,6,6-tetramethylpiperidin-4-yl)-1,2,3,4-butan-tetracarboxylat, 1,1'-(1,2-Ethylen)-bis(3,3,5,5-tetramethylpiperazinon), 4-Benzoyl-2,2,6,6-tetramethylpiperidin, 4-Stearyloxy-2,2,6,6-tetramethylpiperidin, Bis(1,2,2,6,6-pentamethylpiperidin-4-yl)-2-n-butyl-2-(2-hydroxy-3,5-di-tert-butylbenzyl)malonat, 3-n-Octyl-7,7,9,9-tetramethyl-1,3,8-triazaspiro[4.5]decan-2,4-dion, Bis(1-octyloxy-2,2,6,6-tetramethylpiperidin-4-yl)sebacat, Bis(1-octyloxy-2,2,6,6-tetramethylpiperidin-4-yl)succinat, das Kondensationsprodukt aus N,N'-Bis-(2,2,6,6-tetramethylpiperidin-4-yl)hexamethylendiamin und 4-Morpholino-2,6-dichloro-1,3,5-triazin, das Kondensationsprodukt aus 2-Chloro-4,6-bis(4-n-butylamino-2,2,6,6-tetramethylpiperidin-4-yl)-1,3,5-triazin und 1,2-Bis(3-aminopropylamino)ethan, das Kondensationsprodukt aus 2-Chloro-4,6-di-(4-n-butylamino-1,2,2,6,6-pentamethylpiperidin-4-yl)-1,3,5-triazin und 1,2-Bis-(3-aminopropylamino)ethan, 8-Acetyl-3-dodecyl-7,7,9,9-tetramethyl-1,3,8-triazaspiro[4.5]-decan-2,4-dion, 3-Dodecyl-1-(2,2,6,6-tetramethylpiperidin-4-yl)pyrrolidin-2,5-dion, 3-Dodecyl-1-(1,2,2,6,6-pentamethylpiperidin-4-yl)pyrrolidin-2,5-dion, eine Mischung aus 4-Hexadecyloxy- und 4-Stearyloxy-2,2,6,6-tetramethylpiperidin, das Kondensationsprodukt aus N,N'-Bis-(2,2,6,6-tetramethylpiperidin-4-yl)-hexamethylendiamin und 4-Cyclohexylamino-2,6-dichloro-1,3,5-triazin, das Kondensationsprodukt aus 1,2-Bis(3-aminopropylamino)-ethan und 2,4,6-Trichloro-1,3,5-triazin, 4-Butylamino-2,2,6,6-tetramethylpiperidin, N-(2,2,6,6-Tetramethylpiperidin-4-yl)-n-dodecylsuccinimid, N-(1,2,2,6,6-Pentamethylpiperidin-4-yl)-n-dodecylsuccinimid, 2-Undecyl-7,7,9,9-tetramethyl-1-oxa-3,8-diaza-4-oxospiro[4.5]-decan, das Kondensationsprodukt aus 7,7,9,9-Tetramethyl-2-cycloundecyl-1-oxa-3,8-diaza-4-oxospiro-[4.5]decan und Epichlorhydrin, die Kondensationsprodukte aus 4-Amino-2,2,6,6-tetramethylpiperidin mit Tetramethylolacetylendiharnstoffen und Poly(methoxypropyl-3-oxy)-[4(2,2,6,6-tetramethyl)piperidinyl]-siloxan,
Oxamide wie beispielsweise 4,4'-Dioctyloxyoxanilid, 2,2'-Diethoxyoxanilid, 2,2'-Dioctyloxy-5,5'-di-tert-butoxanilid, 2,2'-Didodecyloxy-5,5'-di-tert-butoxanilid, 2-Ethoxy-2'-ethyloxanilid, N,N'-Bis(3-dimethylaminopropyl)oxamid, 2-Ethoxy-5-tert-butyl-2'ethoxanilid und dessen Mischung mit 2-Ethoxy-2'-ethyl-5,4'-ditert-butoxanilid sowie Mischungen von ortho-, para-Methoxy-disubstituierten Oxaniliden und Mischungen von ortho- und para-Ethoxy disubstituierten Oxaniliden und
2-(2-Hydroxyphenyl)-1,3,5-triazine wie beispielsweise 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl) -1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propoxy)-phenyl]-4,6-bis(2,4-dimethyl)-1,3,5-triazin, 2-[2-Hydroxy-4-(2-hydroxy-3-octyloxy-propoxy)phenyl]-4,6-bis(2,4-dimethyl)-1,3,5-triazin, 2-[4-(Dodecyloxy/tridecyloxy-2-hydroxypropoxy)-2-hydroxy-phenyl)-4,6-bis(2,4-dimethylphenyl)-1,3,5-triazin, 2-[2-hydroxy-4-(2-hydroxy-3-dodecyloxy-propoxy)phenyl]-4,6-bis-(2,4-dimethylphenyl)-1,3,5-triazin, 2-(2-Hydroxy-4-hexyloxyphenyl)-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin und 2-(2-Hydroxyphenyl)-4-(4-methoxyphenyl)-6-phenyl-1,3,5-triazin.

Im Rahmen der vorliegenden Erfindung wird die Verwendung der erfindungsgemäßen flüssigkristallinen Stoffgemenge und ihrer bevorzugten Ausführungsformen als Druckfarbe beansprucht. Vorzugsweise kommen hierbei Durch-, Flach- und Hochdruckverfahren in Betracht.

Bei den Durchdruckverfahren sind insbesondere Sieb-, Rahmen-, Film- und Schablonendruck, bei den Flachdruckverfahren insbesondere Offsetdruck und bei den Hochdruckverfahren insbesondere Flexo- und Buchdruck zu nennen.

Weiterer Gegenstand der vorliegenden Erfindung ist die Verwendung der erfindungsgemäßen flüssigkristallinen Stoffgemenge und ihrer bevorzugten Ausführungsformen zum Bedrucken oder Beschichten von Substraten.

Als letztere kommen dabei Gegenstände aus unterschiedlichsten Bereichen wie z.B. dem Fahrzeug- und Fahrzeugzubehörsektor, dem Freizeit-, Sport- und Spielsektor, dem Kosmetikbereich, dem Textil-, Leder- oder Schmuckbereich, dem Dekorationsmittelbereich, dem Geschenkartikelbereich, dem Bereich der Schreibutensilien, dem Verpackungsmittelsektor, dem Bau- und Haushaltssektor, dem Bereich der Druckerzeugnisse, dem kosmetischen oder auch dem medizinischen Bereich in Frage.

Beispielhaft seien hier als solche Substrate/Gegenstände genannt Kartonagen, Verpackungen, Textil- und Kunststofftragetaschen, Papiere, Etiketten, Kunststofffolien, Fahrzeuge jeglicher Art, wie beispielsweise Kinderfahrzeuge, Fahrräder, Motorräder, Personen- und Lastfahrzeuge, Personen- und Lastflugzeuge und entsprechende Fahrzeug-/Flugzeug- und Fahrzeug-/Flugzeugzubehörteile, Geräte der Unterhaltungselektronik und der Datenverarbeitung und insbesondere Gehäuse solcher Geräte, Rollschuhe, Inline-Skater, Skier, (Wind-)Surfbretter, Flugdrachen, medizinische Geräte und Brillengestelle.

Weiter wird im Rahmen der vorliegenden Erfindung die Verwendung der erfindungsgemäßen flüssigkristallinen Stoffgemenge und deren bevorzugten Ausführungsformen in elektrooptischen Bauteilen beansprucht. Hierbei können beispielsweise niedrigvernetzende bzw. niedrigvernetzte erfindungsgemäße Stoffgemenge als flüssigkristalline Matrizes z.B. in Flüssigkristallanzeigen und -bildschirmen dienen. Darüber hinaus kommen die erfindungsgemäßen Stoffgemenge auch als Orientierungsschichten in solchen Anzeigen und Bildschirmen in Betracht.

Im Rahmen der vorliegenden Erfindung wird weiter die Verwendung der erfindungsgemäßen flüssigkristallinen Stoffgemenge und deren bevorzugten Ausführungsformen zur fälschungssicheren Markierung von Gegenständen beansprucht.

Bei diesen Gegenständen handelt es sich beispielsweise um Banknoten, Aktien und sonstige Wertpapiere, Scheck- oder Kreditkarten, Ausweise aber auch um Verpackungen von hochpreisigen Genußmitteln, Eintrittskarten, Wertcoupons und Luxusgütern oder um solche Luxusgüter selbst. Als Stichwort zu letzterem sei die Verhinderung oder zumindest Erschwerung von Markenpiraterie angesprochen.

Im Rahmen der vorliegenden Erfindung wird weiter die Verwendung der erfindungsgemäßen flüssigkristallinen Stoffgemenge und ihrer bevorzugten Ausführungsformen zur Herstellung von Filmen oder Beschichtungen, welche im Wellenlängenbereich von 250 bis 1300 nm selektiv Licht reflektieren, beansprucht. Neben der (selektiven) Reflektion im sichtbaren Bereich des Spektrums sei hier auch die Reflektion von infrarotem und ultraviolettem Licht angesprochen. Dies kann beispielsweise zum Schutz der mit solchen Filmen oder Beschichtungen versehenen Substrate gegen Wärme- bzw. UV-Strahlung dienen.

Gegenstand der vorliegenden Erfindung sind weiter Polymerisate oder polymerisierte Filme, welche durch Polymerisation der erfindungsgemäßen flüssigkristallinen Stoffgemenge und deren bevorzugten Ausführungsformen erhalten worden sind.

Darüber hinaus wird die Verwendung der in dieser Weise erhaltenen polymerisierten Filme als optische Filter, insbesondere polarisierende Farbfilter und Notchfilter, d.h. engbandige Interferenzfilter, als Polarisatoren, insbesondere für Flüssigkristallanzeigen und -bildschirme, als Dekorationsmittel, insbesondere für Kaschierzwecke, als fälschungssichere Markierungsmittel, insbesondere für Scheck- und Kreditkarten sowie Ausweise und als Reflexionsmedien für die selektive Reflexion von Strahlung im Wellenlängenbereich von 250 bis 1300 nm beansprucht.

Gegenstand der vorliegenden Erfindung ist zudem ein Verfahren zum Bedrucken oder Beschichten von Substraten, welches dadurch gekennzeichnet ist, daß man
i) erfindungsgemäße flüssigkristalline Stoffgemenge und deren bevorzugten Ausführungsformen auf die Substrate aufbringt und gegebenenfalls eine Orientierung der flüssigkristallinen Stoffgemenge auf den Substraten herbeiführt,
ii) gegebenenfalls mindestens einen weiteren nicht flüssigkristallinen Druck oder mindestens eine weitere nicht flüssigkristalline Schicht aufbringt
   oder daß man die Schritte i) und ii) in umgekehrter Reihenfolge durchführt,
iii) gegebenenfalls mindestens eine Absorptions- und/oder eine Schutz- und/oder eine gegebenenfalls thermisch aktivierbare Klebeschicht aufbringt und
iv) die in den Schritten i) und gegebenenfalls ii) und/oder iii) hergestellten Drucke und/oder Schichten aushärtet, wobei die Aushärtung entweder direkt nach Aufbringung jedes einzelnen Drucks oder jeder einzelnen Schicht der Schritte i) und gegebenenfalls ii) und/oder iii) oder gleichzeitig erfolgen kann.

Weiter betrifft die vorliegende Erfindung ein zu vorher genanntemanaloges Verfahren zum Bedrucken oder Beschichten von Substraten, welche im Wellenlängenbereich von 250 bis 1300 nm zumindest teilweise durchlässig sind.

Solche verfahrensgemäß hergestellten bedruckten oder beschichteten Substrate seien zur Vereinfachung im Folgenden als Verbunde bezeichnet. Darüber hinaus ist das erfindungegemäße Verfahren nicht allein so zu verstehen, daß in allen Verfahrensschritten i) und gegebenenfalls ii) nur Drucke oder nur Schichten appliziert werden sondern daß Drucke und Schichten auch abwechselnd oder in beliebiger Abfolge und Anzahl auf die Substrate aufgebracht werden können.

Das erstgenannte Verfahren bezieht sich vor allem auf die Herstellung von Verbunden, deren Eigenschaften in Aufsicht, das letztgenannte Verfahren auf die Herstellung von Verbunden, deren Eigenschaften in Aufsicht oder in Durchsicht, d.h. die entsprechenden Substrate sind im Wellenlängenbereich von 250 bis 1300 nm zumindest teilweise durchlässig, zur Geltung kommen sollen.

Wie bereits weiter oben angesprochen, kann man entweder zuerst entsprechende flüssigkristalline Stoffgemenge auf die Substrate und gegebenenfalls im Anschluß daran mindestens einen weiteren nicht flüssigkristallinen Druck oder mindestens eine weitere nicht flüssigkristalline Schicht aufbringen oder man bringt letztere zuerst auf das Substrat und beschichtet oder bedruckt dann mit dem(den) flüssigkristallinen Stoffgemenge(n).

Soll beispielsweise der erfindungsgemäß hergestellte Verbund als Kaschierfolie Verwendung finden, so bildet im kaschierten Produkt das (zumindest teilweise lichtdurchlässige) Substrat des Verbundes selbst die äußerste Schicht, die Aufbringung einer Schutzschicht (Verfahrensschritt iii)) ist nicht zwingend erforderlich.

Der Verbund kann jedoch auch in der Art gestaltet sein, daß beispielsweise zwischen dem im Wellenlängenbereich von 250 bis 1300 nm zumindest teilweise durchlässigen Substrat und dem flüssigkristallinen Stoffgemenge eine Releaseschicht aufgebracht ist, welche, nach Applikation des Verbunds mit der dem Substrat abgewandten Seite auf ein weiteres Substrat, ein Ablösen des (nun äußeren) ersten Substrats ermöglicht. Dies läßt sich z.B. im Rahmen eines Heißprägeprozesses bewerkstelligen.

Durch geeignete Einstellung der Haftungseigenschaften des flüssigkristallinen Stoffgemenges auf dem (ersten) Substrat kann gegebenenfalls auf die Aufbringung einer Releaseschicht verzichtet werden. Das (erste) Substrat kann in diesem Fall nach Applikation auf das weitere Substrat direkt entfernt werden.

Sofern der Verbund farbige flüssigkristalline Stoffgemenge enthält, kann man -zur Verstärkung oder Variation des Farbtons- eine Absorptionsschicht aufbringen. Wird dieser Verbund z.B. als Kaschiermittel für dunkel gefärbte Gegenstände verwendet, so kann nicht nur auf die Aufbringung einer Schutzschicht sondern auch einer entsprechenden Absorptionsschicht (Verfahrensschritt iii)) verzichtet werden.

Die Aushärtung kann direkt im Anschluß an jede Aufbringung gemäß den Schritten i) und gegebenenfalls ii) und/oder iii) oder -sofern durch geeignete Maßnahmen, wie z.B. Antrocknen/Trocknen oder unterschiedliche Mischbarkeiten und/oder Viskositäten der Druckfarben/Beschichtungsmittel eine Durchmischung der Drucke/Schichten verhindert werden kann- auch gleichzeitig, d.h. in einem Aushärtungsschritt (Verfahrensschritt iii)) erfolgen.

Die zu bedruckenden oder beschichtenden Substrate können einfarbig oder mehrfarbig vorbeschichtet sein.

Weiter können die Substrate, sofern nötig, durch geeignete Vorbehandlung in ihren Haftungseigenschaften und/oder Benetzungseigenschaften und/oder Orientierungseigenschaften verbessert sein.

Zur Verbesserung der Haftungseigenschaften kommen beispielsweise Haftvermittler in Frage, die exemplarisch bereits unter den Additiven der Gruppe c7) aufgeführt wurden (Primerung der Substrate).

Zur Verbesserung der Benetzungseigenschaften kommen beispielsweise Substratnetzhilfsmittel in Frage, mit welchen das Substrat entsprechend vorbehandelt werden kann und die exemplarisch bereits unter den Additiven der Gruppe c4) aufgeführt wurden.

Darüber hinaus kann die Verbesserung der Haftungs- und Benetzungseigenschaften der Substrate auch durch jede Form der physikalisch-chemischen Aktivierung erfolgen. In diesem Zusammenhang sei vor allem auf die Aktivierung von Substratoberflächen durch verschiedenste Gasplasmen hingewiesen.

Eine Verbesserung der Orientierungseigenschaften der Substrate gegenüber den erfindungsgemäßen flüssigkristallinen Stoffgemengen und ihren bevorzugten Ausführungsformen (für den Fall, daß Verfahrensschritt i) zuerst ausgeführt wird) kann beispielsweise durch mechanische oder chemische Veränderung der Substratoberfläche, z.B. durch Strecken, Schleifen, Anlösen, Anätzen oder auch Plasmabehandlung erfolgen.

Solche Vorgehensweisen zur Veränderung der Oberflächeneigenschaften von Substraten sind dem Fachmann üblicherweise bekannt.

Weiter kann man nach dem erfindungsgemäßen Verfahren auch Substrate bedrucken oder beschichten, welche magnetisch, elektrisch leitend, photochrom, thermochrom oder lumineszierend sind oder eine Kombination dieser Eigenschaften aufweisen.

Die Substrate können hierbei die genannten Eigenschaften per se besitzen (Masse- oder "Bulk"-Eigenschaften). Diese Eigenschaften können ihnen aber auch durch Zumischen (z.B. Dotieren) von entsprechenden Substanzen (z.B. magnetischen, elektrisch leitenden, photochromen, thermochromen oder lumineszierenden Pigmenten oder photochromen, thermochromen oder lumineszierenden Farbstoffen) oder durch Beschichten, Bedrucken oder Bedampfen mittels entsprechender Druckfarben, Beschichtungs- oder Bedampfungsmittel verliehen werden.

Darüber hinaus kommen auch Kombinationen in Frage, so daß beispielsweise eine fluoreszierende Kunststofffolie (z.B. mit Fluoreszenfarbstoffen oder -pigmenten in Masse eingefärbt) zusätzlich noch mit einer magnetischen oder elektrisch leitfähigen Druckfarbe oder -paste bedruckt oder mit einer Metallschicht bedampft sein kann.

Sofern die Substrate einfarbig oder mehrfarbig vorbeschichtet, durch geeignete Vorbehandlung in ihren Haftungseigenschaften und/oder Benetzungseigenschaften und/oder Orientierungseigenschaften verbessert oder ihnen durch Beschichten, Bedrucken oder Bedampfen magnetische, elektrisch leitende, photochrome, thermochrome und/oder lumineszierende Eigenschaften verliehen worden sind, sollen diese Vorbehandlungen als zum Substrat gehörend und nicht im Sinne eines Verfahrensschritts ii) -sofern dieser vor Verfahrensschritt i) ausgeführt wird- verstanden werden.

Die Aufbringung der Drucke oder Schichten, welche gegebenenfalls in Verfahrensschritt ii) stattfindet, erfolgt mittels Druckfarben oder Beschichtungsmitteln gemäß den einschlägigen Verfahrensweisen. Diese Druckfarben oder Beschichtungsmitteln basieren dabei auf gängigen Binde- und Lösungsmitteln und enthalten üblicherweise noch (effektgebende) Farbstoffe und/oder Pigmente, wie z.B. solche bereits weiter oben angeführte Substanzen der Gruppen d1) und d2).

Entsprechend dem Verfahrensschritt iii) können gegebenenfalls noch Absorptions- und/oder Schutzschichten aufgebracht werden. Dies erfolgt ebenfalls mittels entsprechender Beschichtungsmittel gemäß den einschlägigen Verfahrensweisen. Diese Beschichtungsmittel basieren wiederum auf üblichen Binde- und Lösungsmitteln und enthalten in der Regel absorbierende Farbstoffe und/oder Pigmente und meist noch Additive, welche diesen Absorptions- und/oder Schutzschichten beispielsweise eine erhöhte Kratzfestigkeit verleihen (s. z.B. die bereits oben aufgeführten Additive der Gruppe c8)) oder auch dem licht-, hitze- und/oder oxidationsbedingten Abbau dieser Schichten entgegenwirken (z.B. die ebenfalls bereits oben aufgeführten Additive der Komponente E)).

besonders vorteilhafte Verbunde, z.B. im Hinblick auf die Bereitstellung fälschungssicherer Markierungen, lassen sich herstellen, indem man in Schritt i) farbige und photochemisch polymerisierbare erfindungsgemäße flüssigkristalline Stoffgemenge auf Substrate (etwa Kunststoffolien aus Polyethylenterephthalat) aufbringt, mittels UV-Licht polymerisiert, in Schritt ii) weitere Drucke oder Schichten appliziert, welche z.B. im IR- oder UV-Bereich absorbierende oder fluoreszierende Farbstoffe oder Pigmente enthalten, und (gegebenenfalls nach Aushärtung dieser Drucke oder Schichten) eine abschließende Absorptionsschicht aufbringt.

Es sei hier nur erwähnt, daß als Beschichtungsverfahren für die flüssigkristallinen Stoffgemenge und sonstige nicht flüssigkristalline Schichten -neben den üblichen Beschichtungsmethoden- natürlich auch Druckverfahren im Vollton, wie Flexo-, Sieb- oder Offsetdruck, Verwendung finden können.

Bei Tageslicht von der Folienseite betrachtet zeigen solche Verbunde lediglich einen vom Betrachtungswinkel abhängigen Farbeindruck. Erst mittels IR- oder UV-Lampe und gegebenenfalls entsprechenden Beobachtungsgeräten (z.B. IR-Kamera) zeigt sich die in den Verbunden verborgene zusätzliche Kennzeichnung.

Weiter sind Gegenstand der vorliegenden Erfindung Substrate, auf welche erfindungsgemäße flüssigkristalline Stoffgemenge und deren bevorzugte Ausführungsformen oder daraus erhaltene Polymerisate oder polymerisierte Filme aufgebracht sind oder welche gemäß den erfindungsgemäßen Verfahren beschichtet sind.

### Beispiele:

Als Ausgangsstoffe für Komponente A) der erfindungsgemäßen flüssigkristallinen Stoffgemenge wurden flüssigkristalline Mischungen sowie eine chirale Verbindung als Dotierstoff hergestellt.

### Mischung 1 (M1):

Gemäß Beispiel 48 der Schrift WO 97/00600 wurde durch Umsetzung von 1,4-Bis[4'-hydroxybenzoyloxy]-2-methylbenzol mit einer Mischung von 4-Acryloyloxybutyloxychlorformiat und Butyloxychlorformiat (Molverhältnis 1:1) eine statistische Mischung der vier möglichen Verbindungen 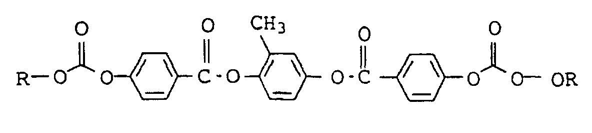 hergestellt, worin R für die Reste 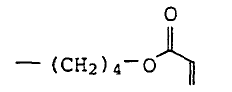 und ―(CH₂)₃―CH₃
in statistischer Verteilung steht.

### Mischung 2 (M2):

Gemäß Beispiel 28 der Schrift WO 98/47979 wurde durch Umsetzung von 1,4-Bis[4'-hydroxybenzoyloxy]-2-methylbenzol mit einer Mischung von 4-Acryloyloxybutylchlorid und Butylchlorid (Molverhältnis 1:1) eine statistische Mischung der vier möglichen Verbindungen 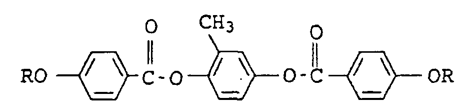 hergestellt, worin R ebenfalls für die Reste 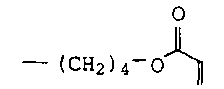 und ―(CH₂)₃―CH₃ in statistischer Verteilung steht.

### Mischung 3 (M3):

Aus 62,5 Gew.-% der Mischung M1 und 37,5 Gew.-% der gemäß Beispiel 18 der Schrift WO 97/00600 durch Umsetzung von 4-(4'-Hydroxybenzoyloxy)-phenol mit 4-Acryloyloxybutylchlorformiat hergestellten Verbindung 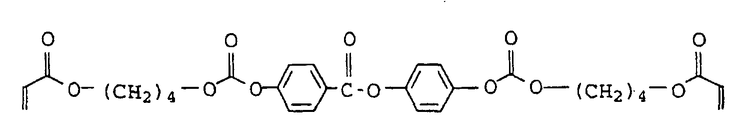 wurde eine Mischung zubereitet.

### Verbindung 1 (V1):

Gemäß Beispiel 6 der Schrift WO 97/00600 wurde durch Umsetzung von 1,4-Bis[4'-hydroxybenzoyloxy]-2-methylbenzol mit 4-Acryloyloxybutylchlorformiat die Verbindungen 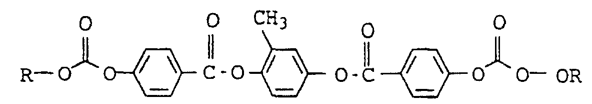 hergestellt, worin R für den Rest 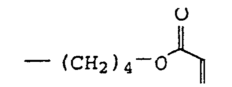 steht.

### Chirale Verbindung 1 (CV1):

Gemäß Beispiel 1 der älteren deutschen Patentanmeldung 198 43 724.2 wurde durch Umsetzung von Bis[4'-hydroxybenzoyl]-1,4:3,6-dianhydrosorbit mit 4-Acryloyloxybutyloxycarbonyloxybenzoylchlorid die chirale Verbindung 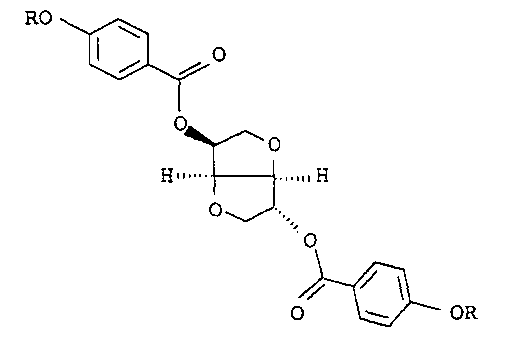 hergestellt, worin R für den Rest 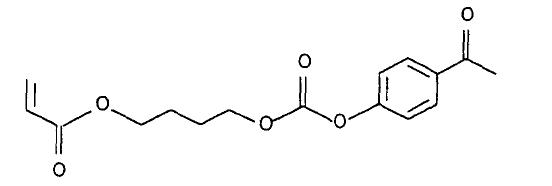 steht.

Es wurden flüssigkristalline Stoffgemenge (in den Tabellen als SG abgekürzt) aus Komponenten A), gegebenenfalls B) und gegebenenfalls C) hergestellt. In den nachfolgenden Tabellen verstehen sich die Prozentangaben als Gew.-% und die Verhältnisangaben als Gewichtsverhältnisse.

### Komponente B) :

Als Photoinitiatoren (b1)) wurden Irgacure® 184, 369 oder 907, als Reaktivverdünner (b2)) Hexandioldiacrylat (Laromer® HDDA, BASF Aktiengesellschaft) oder Ethoxyethoxyethylacrylat und als Verdünnungsmittel (b3)) Solvesso® 100/L33 oder Xylol verwendet.

### Komponente C) :

Als Entschäumer/Entlüfter (c1)) wurden BYK® 57 oder TEGO® Airex 900 und als Gleit- und Verlaufshilfsmittel (c2)) BYK® 361 verwendet.

**Tabelle 1**

| SG | Komponente A) | Komponente B) | Komponente C) | Viskosität |
|---|---|---|---|---|
| | M1 | - | - | 29,9 Pas |
| 1 | M1 85% | 15% Laromer® HDDA | - | nicht bestimmt |
| 2 | M1:CV1 (97:3) 84% | 15% Laromer® HDDA | 1% TEGO® Airex 900 | ∼ 3 Pa.s |
| 3 | M1:CV1 (97:3) 96% | 3% Irgacure® 907 | 1% TEGO® Airex 900 | ∼39 Pa.s |
| 4 | M1:CV1 (97:3) 81% | 15% Laromer® HDDA, 3% Irgacure® 907 | 1% TEGO® Airex 900 | ∼ 4 Pa.s |
| 5 | M1:CV1 (97:3) 76% | 20% Laromer® HDDA, 3% Irgacure® 907 | 1% TEGO® Airex 900 | ∼ 2 Pa.s |
| 6 | M1:CV1 (97:3) 83,8% | 15% Laromer® HDDA | 1,2% BYK® 361 | ∼ 3 Pa·s |
| 7 | M1:CV1 (97:3) 95,8% | 3% Irgacure® 907 | 1,2% BYK® 361 | ∼39 Pa.s |
| 8 | M1:CV1 (97:3) 80,8% | 15% Laromer® HDDA, 3% Irgacure® 907 | 1,2% BYK® 361 | ∼ 4 Pa.s |
| 9 | M1:CV1 (97:3) 75,8% | 20% Laromer® HDDA, 3% Irgacure® 907 | 1,2% BYK® 361 | ∼ 2 Pa.s |

Stoffgemenge 1, 2, 4, 6, 8 und insbesondere 5 und 9 lassen sich problemlos im Siebdruck verdrucken.

**Tabelle 2**

| SG | Komponente A) | Komponente B) | Komponente C) | Viskosität |
|---|---|---|---|---|
| | M2 | - | - | 9, 6 Pa·s |
| 10 | M2:CV1 (97:3) | - | - | ∼ 9 Pa.s |
| 11 | M2:CV1 (97:3) 84% | 15% Laromer® HDDA | 1% TEGO® Airex 900 | ∼ 2 Pa·s |
| 12 | M2:CV1 (97:3) 81% | 15% Laromer® HDDA, 3% Irgacure® 907 | 1% TEGO® Airex 900 | ∼ 2 Pa.s |
| 13 | M2:CV1 (97:3) 83,8% | 15% Laromer® HDDA | 1,2% BYK® 361 | ∼ 2 Pa.s |
| 14 | M2:CV1 (97:3) 80,8% | 15% Laromer® HDDA, 3% Irgacure® 907 | 1,2% BYK® 361 | ∼ 2 Pa.s |

Die Stoffgemenge 10, 11, 13 und insbesondere 12 und 14 lassen sich problemlos im Siebdruck verdrucken.

**Tabelle 3**

| SG | Komponente A) | Komponente B) | Komponente C) | Viskosität |
|---|---|---|---|---|
| 15 | V1:CV1 (97:3) | - | - | nicht bestimmt |
| 16 | SG 15 96,95% | 3% Irgacure® 907 | 0,05% BYK® 361 | nicht bestimmt |

Stoffgemenge 16 läßt sich problemlos im Siebdruck verdrucken.

**Tabelle 4**

| SG | Komponente A) | Komponente B) | Komponente C) | Viskosität |
|---|---|---|---|---|
| 17 | M3:CV1 (96,5:3,5) 90% | 9% Laromer® HDDA | 1% Tego® Airex 900 | 4,1 Pa·s |
| 18 | M3:CV1 (96,5:3,5) 96% | 3% Irgacure® 369 | 1% Tego® Airex 900 | 11,5 Pa·s |
| 19 | M3:CV1 (96,5:3,5) 87% | 9% Laromer® HDDA 3% Irgacure® 369 | 1% Tego® Airex 900 | 4,4 Pa·s |
| 20 | M3:CV1 (96,5:3,5) 87% | 9% Laromer® HDDA 3% Irgacure® 184 | 1% Tego® Airex 900 | 3,8 Pa·s |
| 21 | M3:CV1 (95:5) 87% | 9% Laromer® HDDA 3% Irgacure® 369 | 1% Tego® Airex 900 | 4,5 Pa·s |
| 22 | M3:CV1 (95:5) 87% | 9% Ethoxyethoxyethylacrylat 3% Irgacure® 369 | 1% Byk® 57 | 4,3 Pa·s |
| 23 | M3:CV1 (96:4) 85,5% | 10% Laromer® HDDA 3% Irgacure® 369 | 1,5 % Tego® Airex 900 | 2, 8 Pa·s |
| 24 | M3:CV1 (97:3) 85,5% | 10% Laromer® HDDA 3% Irgacure® 369 | 1,5 % Tego® Airex 900 | 2,5 Pa·s |
| 25 | M3:CV1 (97:3) 84% | 9% Laromer® HDDA 3% Irgacure® 369 3 % Xylol | 1% Tego® Airex 900 | 1,8 Pa·s |
| 26 | M3:CV1 (97:3) 83,5% | 9% Laromer® HDDA 3% Irgacure® 369 3% Solvesso® 100/L33 | 1,5 % Tego® Airex 900 | 2, 0 Pa·s |
| 27 | M3:CV1 (96:4) 83,5% | 9% Laromer® HDDA 3% Irgacure® 369 4 % Xylol | 1,5 % Tego® Airex 900 | 1, 5 Pa·s |

Die Stoffgemenge 17 und 19 bis 27 ließen sich problemlos und mit guter Orientierung des flüssigkristallinen Stoffgemenges im Siebdruck verdrucken. Die Verfilmung der Drucke war gut und der Farbumschlag sehr deutlich ausgeprägt.

### Druck/Beschichtungsbeispiele:

In allen nachfolgenden Beispielen wurde als Substrat Polyethylenterephthalat-Folie (12 µm Dicke, Fa. Teijin) verwendet, welche mit dem erfindungsgemäßen Stoffgemenge 16 aus Tabelle 3 gemäß dem in der älteren deutschen Patentanmeldung 197 38 369.6 beschriebenen Verfahren unter Verwendung von Tetrahydrofuran als Verdünnungsmittel beschichtet worden war.

### Herstellung der Basismischung 1 (BM 1):

35 Gew.-% Methoxypropylacetat, 35 Gew.-% Butylglykol, 20 Gew.-% Testbenzin und 10 Gew.-% Laroflex® MP45 (Vernetzungsmittel auf PVC-Basis, Fa. BASF Aktiengesellschaft) wurden vermischt.

### Herstellung der Basismischung 2 (BM 2):

55 Gew.-% Butylglykol, 25 Gew.-% Laroflex® MP45 (Fa. BASF Aktiengesellschaft), 15 Gew.-% n-Hexyldiglykol und 5 Gew.-% Methoxypropylacetat wurden vermischt. Bezogen auf diese Mischung wurden 0,2 Gew.-% Uvinul® 3039 (Licht-/Oxidationsschutzmittel, Fa. BASF Aktiengesellschaft) zugegeben.

### Beispiel 1:

Eine Mischung von 20 Gew.-% Ultraphor® SF MO (ein durch UV-Licht anregbarer, optischer Aufheller) und 80 Gew.-% BM 1 wurde im Gewichtsverhältnis 1:39 mit BM 2 bis zu einem Gehalt von 0,5 Gew.-% Ultraphor® SF MO in der Gesamtmischung verdünnt. Mit der so erhaltenen Druckfarbe wurde ein Bildmotiv auf die mit dem flüssigkristallinen Stoffgemenge beschichtete Seite der Kunststofffolie mittels Flachbettsiebdruck mit feinem Sieb (180 T) gedruckt. Nach der Trocknung wurde über dieses Bildmotiv ein schwarzer Volltonsiebdruck mit gröberer Siebweite (120 T) aufgedruckt.

Die hierzu verwendete schwarze Druckfarbe wurde durch eindispergieren von 20 Gew.-% Ruß (CK3, Fa.Degussa) in 80 Gew.-% BM 1 und Verdünnen im Gewichtsverhältnis 1:1 mit BM 2 bis zu einem Gehalt von 10 Gew.-% Ruß in der Gesamtmischung hergestellt.

Durch die Beschichtung mit der schwarzen Druckfarbe wird die Farbigkeit der flüssigkristallinen (cholesterischen) Schicht hervorgehoben. Für den Betrachter ist visuell weder in Auf- noch in Durchsicht das im Verbund versteckte Bildmotiv erkennbar. Durch Beleuchtung mit einer UV-Lampe (Fa.Camag, emittierte Wellenlänge 366 nm) wird das Bildmotiv (UV-Blauton) jedoch sichtbar.

### Beispiel 2:

Eine Dispersion von 20 Gew.-% Ruß (CK3, Fa.Degussa) und 80 Gew.-% BM 1 wurde im Gewichtsverhältnis 1:9 mit BM 2 bis zu einem Gehalt von 2 Gew.-% Ruß in der Gesamtmischung verdünnt. Mit dieser Druckfarbe wurde ein Bildmotiv auf die mit dem flüssigkristallinen Stoffgemenge beschichtete Seite der Kunststofffolie mittels Flachbettsiebdruck mit feinem Sieb (180 T) gedruckt. Nach der Trocknung wird über dieses Bildmotiv ein schwarzer Volltonsiebdruck mit gröberer Siebweite (120 T) aufgedruckt.

Die hierzu verwendete schwarze Druckfarbe wurde durch eindispergieren von 20 Gew.-% Paliogenschwarz L 0086 (Fa. BASF Aktiengesellschaft) in 80 Gew.-% BM 1 und Verdünnen im Gewichtsverhältnis 1:1 mit BM 2 bis zu einem Gehalt von 10 Gew. -% Paliogenschwarz L 0086 in der Gesamtmischung hergestellt.

Für den Betrachter ist visuell nur der Farbeffekt der flüssigkristallinen (cholesterischen) Schicht und ein schwarzer Volltondruck erkennbar. Mittels IR-Photographie (Fa.EMO-Elektronik GmbH) ist nur das Bildmotiv sichtbar, der schwarze Volltondruck wird nicht reflektiert.

### Beispiel 3

Eine Dispersion von jeweils 7,5 Gew.-% Ultraphor® SF MO und Ruß (CK3) und 85 Gew.-% BM 1 wurde im Gewichtsverhältnis 1:9 mit BM 2 bis zu einem Gehalt von jewils 0,75 Gew.-% Ultraphor® SF MO bzw. Ruß (CK3) in der Gesamtmischung verdünnt. Mit dieser Druckfarbe wurde ein Bildmotiv auf die mit dem flüssigkristallinen Stoffgemenge beschichtete Seite der Kunststofffolie mittels Flachbettsiebdruck mit feinem Sieb (180 T) gedruckt. Nach der Trocknung wird über dieses Bildmotiv ein schwarzer Volltonsiebdruck mit gröberer Siebweite (120 T) aufgedruckt.

Die hierzu verwendete schwarze Druckfarbe wurde analog Beispiel 2 hergestellt.

Durch die Beschichtung mit der schwarzen Druckfarbe wird die Farbigkeit der flüssigkristallinen (cholesterischen) Schicht hervorgehoben. Für den Betrachter ist visuell weder in Auf- noch in Durchsicht das im Verbund versteckte Bildmotiv erkennbar. Sowohl durch Beleuchtung mit UV-Lampe als auch mittels IR-Photographie wird das Bildmotiv jedoch sichtbar.

Selbstverständlich können unterschiedliche (z.B. komplementäre) UV- und IR-Bildmotive auch in separaten Drucken/Schichten appliziert werden.

## Patentansprüche

1. Flüssigkristalline Stoffgemenge, enthaltend als Komponenten
A) eine flüssigkristalline Mischung, enthaltend
A1) 40 - 99,5 Gew,-% bezogen auf die Gesamtmenge der Komponente A,
mindestens einer Verbindung der Formel Ia
Z¹-Y¹-A¹-Y³-M¹-Y⁴-A²-Y²-Z² Ia
und mindestens einer Verbindung der Formel Ib
Z³-Y⁵-A³-Y⁷-M²-P Ib,
in welchen die Variablen unabhängig voneinander folgende Bedeutung haben:
P Wasserstoff, C₁-C₁₅-Alkyl, welches durch ein oder mehrere Methyl, Fluor, Chlor oder Brom substituiert sein kann und in welchem nicht benachbarte CH₂-Gruppen durch Sauerstoff, Schwefel, -CO-, -O-CO-, -CO-Ooder -O-CO-O- ersetzt sein können, oder eine Gruppierung -Y⁸-A⁴-Y⁶-Z⁴, worin die Variablen die zuvor beschriebene Bedeutung besitzen,
Z¹ bis Z⁴ polymerisierbare Gruppierungen,
Y¹ bis Y⁸ eine chemische Einfachbindung, Sauerstoff, Schwefel, -O-CO-, -CO-O-, -O-CO-O-, -CO-NR-, -NR-CO-, -O-CO-NR-, -NR-CO-O- oder -NR-CO-NR-,
Z¹-Y¹-, Z²-Y²-, Z³-Y⁵ und im gegebenen Fall Z⁴-Y⁶eine Gruppe ausgewählt aus der Gruppe von Methacryloyloxy, Acryloyloxy und Vinyloxy,
R Wasserstoff oder C₁-C₄-Alkyl,
A¹ bis A⁴ Spacer mit 1 bis 30 C-Atomen, in welchen die Kohlenstoffkette durch ein oder mehrere Methyl, Fluor, Chlor oder Brom substituiert und/oder durch Sauerstoff in Etherfunktion, Schwefel in Thioetherfunktion oder durch nichtbenachbarte Iminooder C₁-C₄-Alkyliminogruppen unterbrochen sein kann,
M¹ eine mesogene Gruppe der Formel Ic
-T¹-Y⁹-T^{1'}- Ic,
und
M² eine mesogene Gruppe der Formel Id
(-T²-Y¹⁰)ᵣ-T²- Id,
worin die Variablen in den Formeln Ic und Id unabhängig voneinander folgende Bedeutung haben:
T¹, T^{1'} und T² zweiwertige gesättigte oder ungesättigte carbo- oder heterocyclische Reste,
Y⁹ und Y¹⁰ Brückenglieder gemäß der Definition von Y¹ bis Y⁸ oder -CH₂-O-, -O-CH₂-, -CH=N-, -N=CH- oder -N=N-,
r ein Wert von 0, 1, 2 oder 3,
wobei die Reste T² und Y¹⁰ für den Fall, daß r verschieden von 0 ist, gleich oder verschieden sein können sowie
A2) weiterhin mindestens eine chirale Verbindung ausgewählt aus der Gruppe bestehend aus den Formeln
(Z⁵-Y¹¹)ₙX Ie,
(Z⁵-Y¹¹-A⁵-Y¹²)ₙX If;
(Z⁵-Y¹¹)ₙX; Ig,
sowie
(Z¹¹-Y¹¹-A⁵-Y¹²-M-Y¹³)ₙX Ih
in welchen die Variablen Z⁵ polymerisierbare Gruppierungen, Y¹¹ bis Y¹³ Brückenglieder, A⁵ Spacer und M mesogene Gruppen bezeichnen und welche dieselbe allgemeine Bedeutung wie Y¹ bis Y⁸, A¹ bis A⁴ und M¹ und M² in den Formeln Ia und Ib besitzen, n für Werte von 1, 2, 3, 4, 5 oder 6 steht, X für n wertige chirale Reste wobei die n an den chiralen Rest gebundenen Gruppierungen gleich oder verschieden sein können,
B) als weitere Zusätze
b1) mindestens ein Photoinitiator,
b2) mindestens ein Reaktivverdünner, welcher fotopolymerisierbare Gruppen enthält, und gegebenenfalls
b3) Verdünnungsmittel,
C) gegebenenfalls weitere Zusätze ausgewählt aus der Gruppe bestehend aus
c1) Entschäumern und Entlüftern,
c2) Gleit- und Verlaufshilfsmitteln
c3) thermisch härtenden oder strahlenhärtenden Hilfsmitteln,
c4) Substratnetzhilfsmitteln,
c5) Netz- und Dispergierhilfsmitteln,
c6) Hydrophobierungsmitteln,
c7) Haftvermittlern und
c8) Hilfsmitteln zur Verbesserung der Kratzfestigkeit,
D) gegebenenfalls weitere Zusätze ausgewählt aus der Gruppe bestehend aus
d1) Farbstoffen und
d2) Pigmenten
und
E) gegebenenfalls weitere Zusätze ausgewählt aus der Gruppe der Licht-, Hitze- und/oder Oxidationsstabilisatoren.

2. Flüssigkristalline Stoffgemenge nach Anspruch 1, enthaltend Komponente C) und gegebenenfalls weitere Zusätze ausgewählt aus der Gruppe bestehend aus den Komponenten D) und E).

3. Flüssigkristalline Stoffgemenge nach den Ansprüchen 1 oder 2 mit einer Viskosität bei 20°C von 0,5 bis 10,0 Pa·s.

4. Verwendung von flüssigkristallinen Stoffgemengen gemäß den Ansprüchen 1 bis 3 als Druckfarbe.

5. Verwendung von flüssigkristallinen Stoffgemengen gemäß den Ansprüchen 1 bis 3 zum Bedrucken oder Beschichten von Substraten.

6. Verwendung von flüssigkristallinen Stoffgemengen gemäß den Ansprüchen 1 bis 3 in elektrooptischen Bauteilen.

7. Verwendung von flüssigkristallinen Stoffgemengen gemäß den Ansprüchen 1 bis 3 zur fälschungssicheren Markierung von Gegenständen.

8. Verwendung von flüssigkristallinen Stoffgemengen gemäß den Ansprüchen 1 bis 3 zur Herstellung von Filmen oder Beschichtungen, welche im Wellenlängenbereich von 250 bis 1300 nm selektiv Licht reflektieren.

9. Polymerisate oder polymerisierte Filme, erhalten durch Polymerisation von flüssigkristallinen Stoffgemengen gemäß den Ansprüchen 1 bis 3.

10. Verwendung von polymerisierten Filmen gemäß Anspruch 9 als optische Filter, Polarisatoren, Dekorationsmittel, fälschungssichere Markierungsmittel und Reflexionsmedien für die selektive Reflexion von Strahlung im Wellenlängenbereich von 250 bis 1300 nm.

11. Verfahren zum Bedrucken oder Beschichten von Substraten, **dadurch gekennzeichnet, daß** man
i) flüssigkristalline Stoffgemenge gemäß den Ansprüchen 1 bis 3 auf die Substrate aufbringt und gegebenenfalls eine Orientierung der flüssigkristallinen Stoffgemenge auf den Substraten herbeiführt,
ii) gegebenenfalls mindestens einen weiteren nicht flüssigkristallinen Druck oder mindestens eine weitere nicht flüssigkristalline Schicht aufbringt
oder daß man die Schritte i) und ii) in umgekehrter Reihenfolge durchführt,
iii) gegebenenfalls mindestens eine Absorptions- und/oder eine Schutz- und/oder eine gegebenenfalls thermisch aktivierbare Klebeschicht aufbringt und
iv) die in den Schritten i) und gegebenenfalls ii) und/oder iii) hergestellten Drucke und/oder Schichten aushärtet, wobei die Aushärtung entweder direkt nach Aufbringung jedes einzelnen Drucks oder jeder einzelnen Schicht der Schritte i) und gegebenenfalls ii) und/oder iii) oder gleichzeitig erfolgen kann.

12. Verfahren gemäß Anspruch 11, **dadurch gekennzeichnet, dass** das Substrat im Wellenlängenbereich von 250 - 1300 nm zumindest teilweise durchlässig ist.

13. Verfahren gemäß Anspruch 11, **dadurch gekennzeichnet, dass** das Substrat einfarbig oder mehrfarbig vorbeschichtet ist.

14. Verfahren zur Herstellung fälschungssicherer Markierungen, **dadurch gekennzeichnet, dass** man bei dem Verfahren gemäß Anspruch 11
in Schritt i) farbige und photochemisch polymerisierbare flüssigkristalline Stoffgemenge aufbringt und mittels UV-Licht polymerisiert,
in Schritt ii) weitere Drucke oder Schichten appliziert, welche im IR - oder UV-Bereich absorbierende oder fluoreszierende Farbstoffe oder Pigmente enthalten,
und eine Absorptionsschicht aufbringt.

15. Verfahren gemäß einem der Ansprüche 11 bis 14, **dadurch gekennzeichnet, dass** in allen Vefahrensschritten i), sowie ggf. ii) Drucke und Schichten auch abwechselnd oder in beliebiger Abfolge und Anzahl auf die Substrate aufgebracht werden.

16. Substrate, auf welche flüssigkristalline Stoffgemenge gemäß den Ansprüchen 1 bis 3 oder Polymerisate oder polymerisierte Filme gemäß Anspruch 9 aufgebracht sind oder welche gemäß einem Verfahren nach einem der Anspruch 11 bis 15 bedruckt oder beschichtet sind.

## Claims

1. Liquid-crystalline compositions comprising, as components,
A) a liquid-crystalline mixture comprising
A1) 40-99.5% by weight, based on the total amount of component A,
of at least one compound of the formula Ia
Z¹-Y¹-A¹-Y³-M¹-Y⁴-A²-Y²-Z² Ia
and of at least one compound of the formula Ib
Z³-Y⁵-A³-Y⁷-M²-P Ib
where the variables, independently of one another, have the following meanings:
P is hydrogen, C₁-C₁₅-alkyl, which may be monosubstituted or polysubstituted by methyl, fluorine, chlorine or bromine and in which non-adjacent CH₂ groups may be replaced by oxygen, sulfur, -CO-, -O-CO-, -CO-O- or -O-CO-O-, or a -Y⁸-A⁴-Y⁶-Z⁴ moiety, where the variables are as defined above,
Z¹ to Z⁴ are polymerizable moieties,
Y¹ to Y⁸ are each a single chemical bond, oxygen, sulfur, -O-CO-, -CO-O-, -O-CO-O-, -CO-NR-, -NR-CO-, -O-CO-NR-, -NR-CO-O or -NR-CO-NR-,
Z¹-Y¹-, Z²-Y²-, Z³-Y⁵ and in the appropriate case Z⁴-Y⁶- are each a group selected from the group consisting of methacryloyloxy, acryloyloxy and vinyloxy,
R is hydrogen or C₁-C₄-alkyl,
A¹ to A⁴ are spacers having 1 to 30 carbon atoms, in each of which the carbon chain may be monosubstituted or polysubstituted by methyl, fluorine, chlorine or bromine and/or interrupted by ether oxygen, thioether sulfur or by non-adjacent imino or C₁-C₄-alkylimino groups,
M¹ is a mesogenic group of the formula Ic
-T¹-Y⁹-T^{1'}- Ic
and
M² is a mesogenic group of the formula Id
(-T²-Y¹⁰)ᵣ-R²- Id
where the variables in the formulae Ic and Id, independently of one another, are as defined below:
T¹, T^{1'} and T² are divalent saturated or unsaturated carbocyclic or heterocyclic radicals,
Y⁹ and Y¹⁰ are bridging units as per the definition of Y¹ to Y⁸ or -CH₂-O-, -O-CH₂-, -CH=N-, -N=CH- or -N=N-,
r is a value of 0, 1, 2 or 3,
where the radicals T² and Y¹⁰, in the case where r is not 0, may be identical or different, and also
A2) further at least one chiral compound selected from the group consisting of the formulae
(Z⁵-Y¹¹)ₙX Ie,
(Z⁵-Y¹¹-A⁵-Y¹²)ₙX If;
(Z⁵-Y¹¹)ₙX; Ig,
and also
(Z¹¹-Y¹¹-A⁵-Y¹²-M-Y¹³)ₙX Ih
in each of which the variables Z⁵ signify polymerizable moieties, Y¹¹ to Y¹³ signify bridging units, A⁵ signifies spacers and M signifies mesogenic groups and which have the same general meaning as Y¹ to Y⁸, A¹ to A⁴ and M¹ and M² in the formulae Ia and Ib, n represents values of 1, 2, 3, 4, 5 or 6, X represents n-valent chiral radicals, the n moieties attached to the chiral radical being identical or different,
B) as further additives
b1) at least one photoinitiator,
b2) at least one reactive thinner which contains photopolymerizable groups and optionally
b3) diluents,
C) optionally further additives selected from the group consisting of
c1) antifoams and deaerators,
c2) lubricating and flow-control agents,
c3) thermally curing or radiation-curing auxiliaries,
c4) substrate wetting auxiliaries,
c5) wetting and dispersion auxiliaries,
c6) hydrophobicizing agents,
c7) adhesion promoters and
c8) auxiliaries for improving the scratch resistance,
D) optionally further additives selected from the group consisting of
d1) dyes and
d2) pigments
and
E) optionally further additives selected from the group consisting of light, heat and/or oxidation stabilizers.

2. Liquid-crystalline compositions according to claim 1, comprising
component C) and optionally further additives selected from the group consisting of components D) and E).

3. Liquid-crystalline compositions according to claims 1 or 2 having a viscosity of from 0.5 to 10.0 Pa·s at 20°C.

4. The use of liquid-crystalline compositions as per claims 1 to 3 as a printing ink.

5. The use of liquid-crystalline compositions as per claims 1 to 3 for printing or coating substrates.

6. The use of liquid-crystalline compositions as per claims 1 to 3 in electro-optical components.

7. The use of liquid-crystalline compositions as per claims 1 to 3 for counterfeiting-proof marking of articles.

8. The use of liquid-crystalline compositions as per claims 1 to 3 for the production of films or coatings which selectively reflect light in the wavelength range from 250 to 1300 nm.

9. Addition polymers or polymerized films obtained by addition polymerization of liquid-crystalline compositions as per claims 1 to 3.

10. The use of polymerized films as per claim 9 as optical filters, polarizers, decorations, counterfeiting-proof marking agents and reflective media for the selective reflection of radiation in the wavelength range from 250 to 1300 nm.

11. A process for printing or coating substrates, **characterized in that**
i) liquid-crystalline compositions as per claims 1 to 3 are applied to the substrates and, if appropriate, the liquid-crystalline compositions are aligned on the substrates,
ii) optionally at least one further non-liquid-crystalline print or at least one further non-liquid-crystalline layer is applied
or **in that** said steps i) and ii) are carried out in reverse order,
iii) optionally at least one absorptive and/or protective and/or optionally thermally activatable adhesive layer is applied and
iv) the prints and/or layers produced in said steps i) and optionally ii) and/or iii) are cured, which curing may take place either directly after application of each individual print or layer of said steps i) and optionally ii) and/or iii) or simultaneously.

12. A process as per claim 11, **characterized in that** the substrate is at least partially transparent in the wavelength range of 250-1300 nm.

13. A process as per claim 11, **characterized in that** the substrate has been precoated in one or more colors.

14. A process for producing counterfeiting-proof markings, **characterized in that**, in the process of claim 11,
in step i) colored and photochemically polymerizable liquid-crystalline compositions are applied and polymerized by means of UV light,
in step ii) further prints or layers are applied that contain dyes or pigments which absorb or fluoresce in the IR or UV region,
and an absorptive layer is applied.

15. A process as per any of claims 11 to 14, **characterized in that** prints and layers may also be applied alternately or in any desired order and number to the substrates in all process steps i) and optionally ii).

16. Substrates to which liquid-crystalline compositions as per claims 1 to 3 or addition polymers or polymerized films as per claim 9 have been applied or which have been printed or coated as per a process according to any of claim 11 to 15.

## Revendications

1. Mélange de substances en cristaux liquides, contenant comme composants
A) un mélange de cristaux liquides, contenant
A1) 40 - 99,5 % en poids, par rapport à la quantité totale du composant A, d'au moins un composé de formule Ia
Z¹-Y¹-A¹-Y³-M¹-Y⁴-A²-Y²-Z² Ia
et d'au moins un composé de formule Ib
Z³-Y⁵-A³-Y⁷-M²-P Ib,
dans lesquelles les variables ont indépendamment l'une de l'autre la signification suivante:
P l'hydrogène, un alkyle en C₁-C₁₅, qui peut être substitué par un ou plusieurs groupes méthyle, fluor, chlore ou brome, et dans lequel des groupes CH₂ non-vicinaux peuvent être remplacés par des groupes oxygène, soufre, -CO-, -O-CO-, -CO-O- ou -O-CO-O-, ou un groupement -Y⁸-A⁴-Y⁶-Z⁴, où les variables possèdent la signification indiquée plus haut,
Z¹ à Z⁴ des groupements polymérisables,
Y¹ à Y⁸ une liaison chimique simple, l'oxygène, le soufre, -O-CO-, -CO-O-, -O-CO-O-, -CO-NR-, -NR-CO-, -O-CO-NR-, -NR-CO-O- ou -NR-CO-NR-,
Z¹-Y¹-, Z²-Y²-, Z³-Y⁵- et le cas échéant Z⁴-Y⁶- un groupe choisi dans le groupe du méthacryloyloxy, de l'acryloyloxy et du vinyloxy,
R l'hydrogène ou un alkyle en C₁-C₄,
A¹ à A⁴ un espaceur ayant 1 à 30 atomes de carbone, dans lequel la chaîne carbonée peut être substituée par un ou plusieurs groupes méthyle, fluor, chlore ou brome, et/ou peut être interrompue par de l'oxygène dans la fonction éther, par du soufre dans la fonction thioéther ou par des groupes imino ou alkyl(C₁-C₄)imino non-vicinaux,
M¹ un groupe mésogène de formule Ic
-T¹-Y⁹-T^{1'}- Ic,
et
M² un groupe mésogène de formule Id
(-T²-Y¹⁰)ᵣ-T²- Id,
où les variables dans les formules Ic et Id ont indépendamment l'une de l'autre la signification suivante:
T¹, T^{1'} et T² des restes carbo- ou hétérocycliques bivalents, saturés ou insaturés,
Y⁹ et Y¹⁰ des éléments pontants conformément à la définition de Y¹ à Y⁸ ou -CH₂-O-, -O-CH₂-, -CH=N-, -N=CH- ou -N=N-,
r une valeur de 0, 1, 2 ou 3,
tandis que les restes T² et Y¹⁰, dans le cas où r est différent de 0, peuvent être identiques ou différents, ainsi que
A2) en outre au moins un composé chiral choisi dans le groupe consistant en les formules
(Z⁵-Y¹¹)ₙX Ie,
(Z⁵-Y¹¹-A⁵-Y¹²)ₙX If,
(Z⁵-Y¹¹)ₙX Ig,
ainsi que
(Z¹¹Y¹¹-A⁵-Y¹²-M-Y¹³)ₙX Ih,
dans lesquelles les variables Z⁵ désigne des groupements polymérisables, Y¹¹ à Y¹³ représentent des éléments pontants, A⁵ désigne un espaceur et M désigne des groupes mésogènes et qui possèdent la même signification générale que Y¹ à Y⁸, A¹ à A⁴ et M¹ et M² dans les formules Ia et Ib, n représente des valeurs de 1, 2, 3, 4, 5 ou 6, X des restes chiraux n valents, tandis que les n groupements liés au reste chiral peuvent être identiques ou différents,
B) comme autres additifs
b1) au moins un photoinitiateur,
b2) au moins un diluant réactif, qui contient des groupes photopolymérisables, et éventuellement
b3) des agents diluants,
C) éventuellement d'autres additifs choisis dans le groupe consistant en
c1) des agents anti-mousse et des agents d'élimination de l'air,
c2) des agents lubrifiants et des adjuvants de propagation,
c3) des adjuvants durcissant par voie thermique ou durcissant sous rayonnement,
c4) des adjuvants de réticulation au substrat,
c5) des adjuvants de réticulation et de dispersion,
c6) des agents d'hydrophobisation,
c7) des médiateurs d'adhérence et
c8) des adjuvants pour l'amélioration de la résistance aux éraflures,
D) éventuellement d'autres additifs choisis dans le groupe consistant en
d1) des colorants et
d2) des pigments
et
E) éventuellement d'autres additifs choisis dans le groupe des stabilisants vis-à-vis de la lumière, de la chaleur et/ou de l'oxydation.

2. Mélanges de substances en cristaux liquides selon la revendication 1, contenant le composant C) et en option d'autres additifs choisis dans le groupe consistant en les composants D) et E).

3. Mélanges de substances en cristaux liquides selon les revendications 1 ou 2 ayant une viscosité à 20°C de 0,5 à 10,0 Pa·s.

4. Utilisation de mélanges de substances en cristaux liquides selon les revendications 1 à 3 comme encre d'impression.

5. Utilisation de mélanges de substances en cristaux liquides selon les revendications 1 à 3 pour l'impression ou le revêtement de substrats.

6. Utilisation de mélanges de substances en cristaux liquides selon les revendications 1 à 3 dans des composants électro-optiques.

7. Utilisation de mélanges de substances en cristaux liquides selon les revendications 1 à 3 pour le marquage d'objets contre la falsification.

8. Utilisation de mélanges de substances en cristaux liquides selon les revendications 1 à 3 pour la préparation de films ou de revêtements qui réfléchissent sélectivement la lumière dans le domaine de longueurs d'onde de 250 à 1300 nm.

9. Polymères ou films polymérisés, obtenus par polymérisation de mélanges de substances en cristaux liquides selon les revendications 1 à 3.

10. Utilisation de films polymérisés selon la revendication 9 comme filtres optiques, polariseurs, produits de décoration, agents de marquage contre la falsification et moyens de réflexion pour la réflexion sélective d'un rayonnement dans le domaine de longueurs d'onde de 250 à 1300 nm.

11. Procédé pour l'impression ou le revêtement de substrats, **caractérisé par le fait que**
i) on applique des mélanges de substances en cristaux liquides selon les revendications 1 à 3 sur les substrats et éventuellement on provoque une orientation des mélanges de substances en cristaux liquides sur les substrats,
ii) on applique éventuellement au moins une autre impression non à base de cristaux liquides ou au moins une autre couche non à base de cristaux liquides,
ou **par le fait qu'**on conduit les étapes i) et ii) dans l'ordre inverse,
iii) on applique éventuellement au moins une couche d'absorption et/ou une couche de protection et/ou une couche adhésive éventuellement activable par voie thermique et
iv) on durcit les impressions et/ou les couches élaborées dans les étapes i) et éventuellement ii) et/ou iii), tandis que le durcissement peut être effectué soit directement après l'application de chaque impression individuelle ou de chaque couche individuelle des étapes i) et éventuellement ii) et/ou iii), soit simultanément.

12. Procédé selon la revendication 11, **caractérisé par le fait que** le substrat est au moins partiellement transparent dans le domaine de longueurs d'onde de 250 - 1300 nm.

13. Procédé selon la revendication 11, **caractérisé par le fait que** le substrat est prérevêtu avec une ou plusieurs couleurs.

14. Procédé pour la préparation de marquages contre la falsification, **caractérisé par le fait que**, par le procédé selon la revendication 11,
dans l'étape i) on applique des mélanges de substances en cristaux liquides colorés et polymérisables par voie photochimique et on polymérise au moyen d'une lumière UV,
dans l'étape ii) on applique d'autres impressions ou couches, qui contiennent des colorants ou des colorants absorbant dans le domaine IR ou UV ou fluorescents.

15. Procédé selon l'une des revendications 11 à 14, **caractérisé par le fait que** dans toutes les étapes opératoires i), ainsi qu'éventuellement ii) on applique des impressions et des couches également alternées ou dans un ordre et un nombre quelconques sur les substrats.

16. Substrats, sur lesquels sont appliqués des mélanges de substances en cristaux liquides selon les revendications 1 à 3 ou des polymères ou des films polymérisés selon la revendication 9, ou qui sont imprimés ou revêtus conformément à un procédé selon l'une des revendications 11 à 15.
